# EUROPEAN PATENT APPLICATION

(11) **EP 4 521 336 A1**
(43) Date of publication of application: **12.03.2025**
(21) Application number: 23830009.9
(22) Date of filing: 16.06.2023
(51) Int. Cl.: G06T 5/00

(54) **HDR IMAGE EDITING METHOD AND APPARATUS, ELECTRONIC DEVICE, AND READABLE STORAGE MEDIUM**

(30) Priority: 27.06.2022 CN 202210734387
(71) Applicant: Huawei Technologies Co., Ltd., Shenzhen, Guangdong 518129 (CN)
(72) Inventor: HUANG, Huang, Shenzhen, Guangdong 518129 (CN); XI, Ming, Shenzhen, Guangdong 518129 (CN); LI, Jian, Shenzhen, Guangdong 518129 (CN)
(74) Representative: Goddar, Heinz J.
(86) International application number: PCT/CN2023/100737
(87) International publication number: WO 2024/001829

(57) **Abstract**

Embodiments of this application disclose an HDR image editing method and apparatus, an electronic device, and a readable storage medium. The method includes: An electronic device displays an HDR image; detects a partial editing operation on the HDR image; edits, in response to the partial editing operation, a standard dynamic range SDR image corresponding to the HDR image and an HDR auxiliary image corresponding to the HDR image, to obtain an edited SDR image and an edited HDR auxiliary image; and display an edited HDR image based on the edited SDR image and the edited HDR auxiliary image. In embodiments of this application, when a user performs partial editing on the HDR image, the SDR image and the HDR auxiliary image are synchronously edited, so that a partial editing function for the HDR image is implemented while an HDR display effect is supported, to meet a partial editing requirement of the user for the HDR image.

## Description

This application claims priority to Chinese Patent Application No. 202210734387.8, filed with the China National Intellectual Property Administration on June 27, 2022 and entitled "HDR IMAGE EDITING METHOD AND APPARATUS, ELECTRONIC DEVICE, AND READABLE STORAGE MEDIUM", which is incorporated herein by reference in its entirety.

### TECHNICAL FIELD

This application relates to the field of image technologies, and in particular, to an HDR image editing method and apparatus, an electronic device, and a readable storage medium.

### BACKGROUND

For a digital image, a dynamic range (Dynamic Range, DR) is a ratio of maximum brightness of the image to minimum brightness of the image, that is, a relative ratio of a brightest part of the image to a darkest part of the image. A larger dynamic range of an image indicates richer brightness levels and a higher contrast.

A high dynamic range (High Dynamic Range Imaging, HDR) image is an image that has a higher dynamic range than a standard 8-bit digital image. In other words, the HDR image has a larger dynamic range and more image details, and can better reflect a bright brightness level to a dark brightness level in the real world.

Currently, electronic devices that support HDR display functions generally have global editing functions for HDR images. Therefore, users can perform global editing operations on the HDR images displayed by the electronic devices. The global editing operations include: adjustment operations on global brightness, a global contrast, a global tone, global saturation, and the like, and global deformation operations such as rotation, cropping, stretching, and scaling. However, the electronic devices have no partial editing functions for the HDR images, and cannot meet partial editing requirements of the users for the HDR images.

### SUMMARY

Embodiments of this application provide an HDR image editing method and apparatus, an electronic device, and a readable storage medium, so that a partial editing function for an HDR image can be implemented while an HDR display effect is supported, to meet a partial editing requirement of a user for the HDR image.

According to a first aspect, an embodiment of this application provides an HDR image editing method. The method is applied to an electronic device and includes: displaying an HDR image; detecting a partial editing operation on the HDR image; editing, in response to the partial editing operation, a standard dynamic range SDR image corresponding to the HDR image and an HDR auxiliary image corresponding to the HDR image, to obtain an edited SDR image and an edited HDR auxiliary image; and displaying an edited HDR image based on the edited SDR image and the edited HDR auxiliary image.

It can be learned from the foregoing that in this embodiment of this application, when a user performs the partial editing operation, the SDR image and the HDR auxiliary image are synchronously edited, and HDR display is performed based on the edited SDR image and the edited HDR auxiliary image, so that a partial editing function for the HDR image is implemented while an HDR display effect is supported, to meet a partial editing requirement of the user for the HDR image.

In a possible implementation of the first aspect, the partial editing operation includes a partial smearing overlay operation; and
the editing, in response to the partial editing operation, a standard dynamic range SDR image corresponding to the HDR image and an HDR auxiliary image corresponding to the HDR image, to obtain an edited SDR image and an edited HDR auxiliary image includes:
adding a smearing overlay pattern corresponding to the partial smearing overlay operation to a first target area in the SDR image, to obtain the edited SDR image; and
adding the smearing overlay pattern to a second target area in the HDR auxiliary image, to obtain the edited HDR auxiliary image, where
the first target area is an area that is in the SDR image and that is corresponding to a smearing overlay area in the HDR image, the second target area is an area that is in the HDR auxiliary image and that is corresponding to the smearing overlay area in the HDR image, and the smearing overlay area is an area on which the partial smearing overlay operation is performed in the HDR image.

In this implementation, the smearing overlay pattern is synchronously added to the corresponding areas in the SDR image and the HDR auxiliary image, to synchronously modify the SDR image and the HDR auxiliary image. This implements the partial smearing overlay editing function for the HDR image, so that an HDR display effect of the image on which the partial smearing overlay operation has been performed can be maintained.

In a possible implementation of the first aspect, the partial smearing overlay operation includes at least one of the following: a watermark operation, a doodle operation, a mosaic operation, and a sticker operation.

In a possible implementation of the first aspect, the edited HDR image includes the smearing overlay pattern; and the method further includes:
detecting an adjustment operation performed by a brightness adjustment control, where the brightness adjustment control is displayed on an HDR image display interface and is configured to adjust brightness of the smearing overlay pattern; and
displaying a brightness-adjusted HDR image in response to the adjustment operation; where
brightness of the smearing overlay pattern in the brightness-adjusted HDR image is different from that of the smearing overlay pattern in the edited HDR image.

In this implementation, the brightness adjustment control is provided for the user to define a brightness value of the smearing overlay pattern, so that HDR display is implemented for the user-defined brightness of the smearing overlay pattern, and user experience is further improved.

In a possible implementation of the first aspect, the displaying a brightness-adjusted HDR image in response to the adjustment operation includes:
in response to the adjustment operation, setting a brightness value of the smearing overlay pattern in the edited HDR auxiliary image to a first value, to obtain a brightness-adjusted HDR auxiliary image, where the first value is a brightness value determined based on the adjustment operation; and
displaying the brightness-adjusted HDR image based on the brightness-adjusted HDR auxiliary image and the edited SDR image.

In a possible implementation of the first aspect, an adjustment range of the brightness adjustment control is from a maximum brightness value of the HDR auxiliary image to a minimum brightness value of the HDR auxiliary image.

In a possible implementation of the first aspect, the partial editing operation includes a partial AI editing operation; and
the editing, in response to the partial editing operation, a standard dynamic range SDR image corresponding to the HDR image and an HDR auxiliary image corresponding to the HDR image, to obtain an edited SDR image and an edited HDR auxiliary image includes:
separately normalizing the SDR image and the HDR auxiliary image to obtain a normalized SDR image and a normalized HDR auxiliary image;
performing image fusion on the normalized SDR image and the normalized HDR auxiliary image to obtain a fused image;
performing a partial AI editing operation on the fused image to obtain an edited fused image;
performing the partial AI editing operation on the SDR image to obtain the edited SDR image; and
performing reverse calculation based on the edited fused image and the edited SDR image, to obtain the edited HDR auxiliary image.

In this implementation, the SDR image and the HDR auxiliary image are first fused, the corresponding AI editing operation is synchronously performed on the fused image and the SDR image, and finally the edited HDR auxiliary image is obtained through reverse calculation, so that an HDR display effect of the image on which the partial AI editing operation has been performed can still be maintained.

In a possible implementation of the first aspect, the partial AI editing operation includes at least one of the following: AI elimination, AI beauty, and AI distortion correction.

According to a second aspect, an embodiment of this application provides an HDR image editing apparatus, including an HDR display module and an HDR editing module;
the HDR display module is configured to display an HDR image;
the HDR editing module is configured to: after detecting a partial editing operation on the HDR image, edit, in response to the partial editing operation, a standard dynamic range SDR image corresponding to the HDR image and an HDR auxiliary image corresponding to the HDR image, to obtain an edited SDR image and an edited HDR auxiliary image; and
the HDR display module is further configured to display an edited HDR image based on the edited SDR image and the edited HDR auxiliary image.

In a possible implementation of the second aspect, the partial editing operation includes a partial smearing overlay operation; and
the HDR editing module is specifically configured to:
add a smearing overlay pattern corresponding to the partial smearing overlay operation to a first target area in the SDR image, to obtain the edited SDR image; and
add the smearing overlay pattern to a second target area in the HDR auxiliary image, to obtain the edited HDR auxiliary image, where
the first target area is an area that is in the SDR image and that is corresponding to a smearing overlay area in the HDR image, the second target area is an area that is in the HDR auxiliary image and that is corresponding to the smearing overlay area in the HDR image, and the smearing overlay area is an area on which the partial smearing overlay operation is performed in the HDR image.

In a possible implementation of the second aspect, the partial smearing overlay operation includes at least one of the following: a watermark operation, a doodle operation, a mosaic operation, and a sticker operation.

In a possible implementation of the second aspect, the edited HDR image includes the smearing overlay pattern;
the HDR editing module is further configured to detect an adjustment operation performed by a brightness adjustment control, where the brightness adjustment control is displayed on an HDR image display interface and is configured to adjust brightness of the smearing overlay pattern; and
the HDR display module is further configured to display a brightness-adjusted HDR image in response to the adjustment operation; where
brightness of the smearing overlay pattern in the brightness-adjusted HDR image is different from that of the smearing overlay pattern in the edited HDR image.

In a possible implementation of the second aspect, the HDR editing module is specifically configured to: in response to the adjustment operation, set a brightness value of the smearing overlay pattern in the edited HDR auxiliary image to a first value, to obtain a brightness-adjusted HDR auxiliary image, where the first value is a brightness value determined based on the adjustment operation; and
the HDR display module is specifically configured to display the brightness-adjusted HDR image based on the brightness-adjusted HDR auxiliary image and the edited SDR image.

In a possible implementation of the second aspect, an adjustment range of the brightness adjustment control is from a maximum brightness value of the HDR auxiliary image to a minimum brightness value of the HDR auxiliary image.

In a possible implementation of the second aspect, the partial editing operation includes a partial AI editing operation; and
the HDR editing module is specifically configured to:
separately normalize the SDR image and the HDR auxiliary image to obtain a normalized SDR image and a normalized HDR auxiliary image;
perform image fusion on the normalized SDR image and the normalized HDR auxiliary image to obtain a fused image;
perform a partial AI editing operation on the fused image to obtain an edited fused image;
perform the partial AI editing operation on the SDR image to obtain the edited SDR image; and
perform reverse calculation based on the edited fused image and the edited SDR image, to obtain the edited HDR auxiliary image.

In a possible implementation of the second aspect, the partial AI editing operation includes at least one of the following: AI elimination, AI beauty, and AI distortion correction.

According to a third aspect, an embodiment of this application provides an electronic device, including a memory, a processor, and a computer program that is stored in the memory and that is capable of being run on the processor. The processor implements the method according to any one of the first aspect when executing the computer program.

According to a fourth aspect, an embodiment of this application provides a computer-readable storage medium. The computer-readable storage medium stores a computer program, and when the computer program is executed by a processor, the method according to any one of the first aspect is implemented.

According to a fifth aspect, an embodiment of this application provides a chip system. The chip system includes a processor, and the processor is coupled to a memory. The processor executes a computer program stored in the memory, to implement the method according to any one of the first aspect. The chip system may be a single chip or a chip module including a plurality of chips.

According to a sixth aspect, an embodiment of this application provides a computer program product. When the computer program product runs on an electronic device, the electronic device is enabled to perform the method according to any one of the first aspect.

It can be understood that, for beneficial effects of the second aspect to the sixth aspect, refer to related descriptions in the first aspect. Details are not described herein again.

### BRIEF DESCRIPTION OF DRAWINGS

FIG. 1A-1 to FIG. 1A-4 are diagrams of photographing an HDR image according to an embodiment of this application;
FIG. 1B-1 to FIG. 1B-3 are diagrams of a global editing operation on an HDR image according to an embodiment of this application;
FIG. 2A to FIG. 2C are diagrams of a doodle operation on an HDR image according to an embodiment of this application;

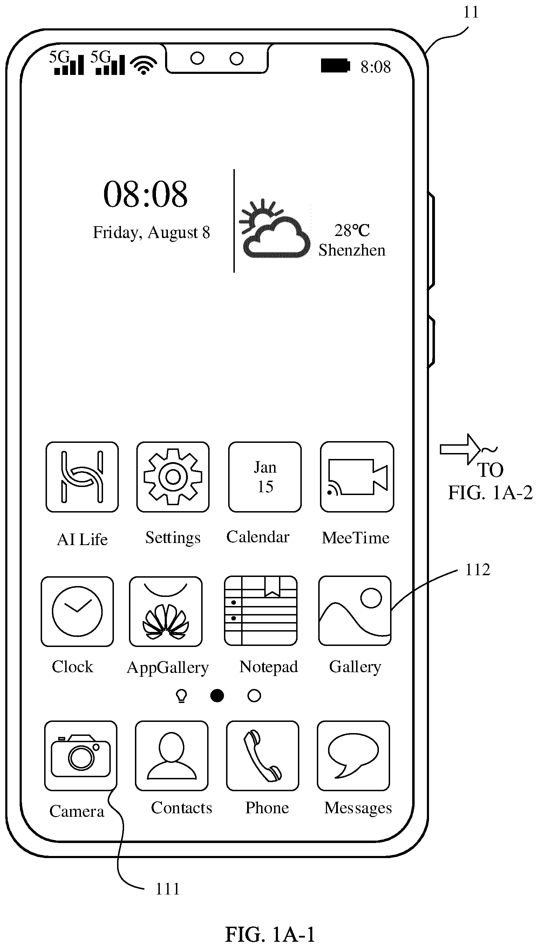

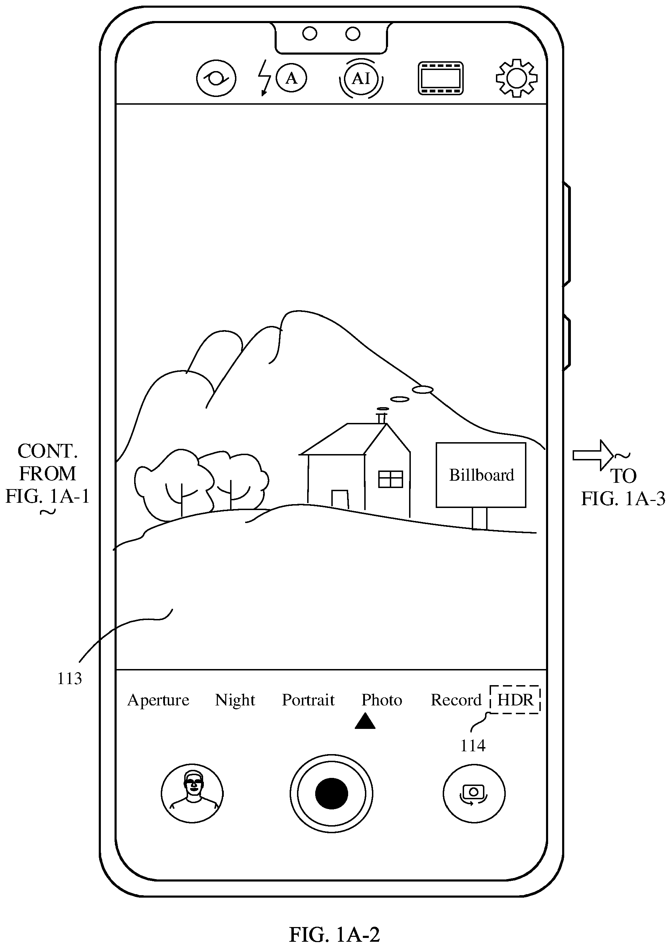

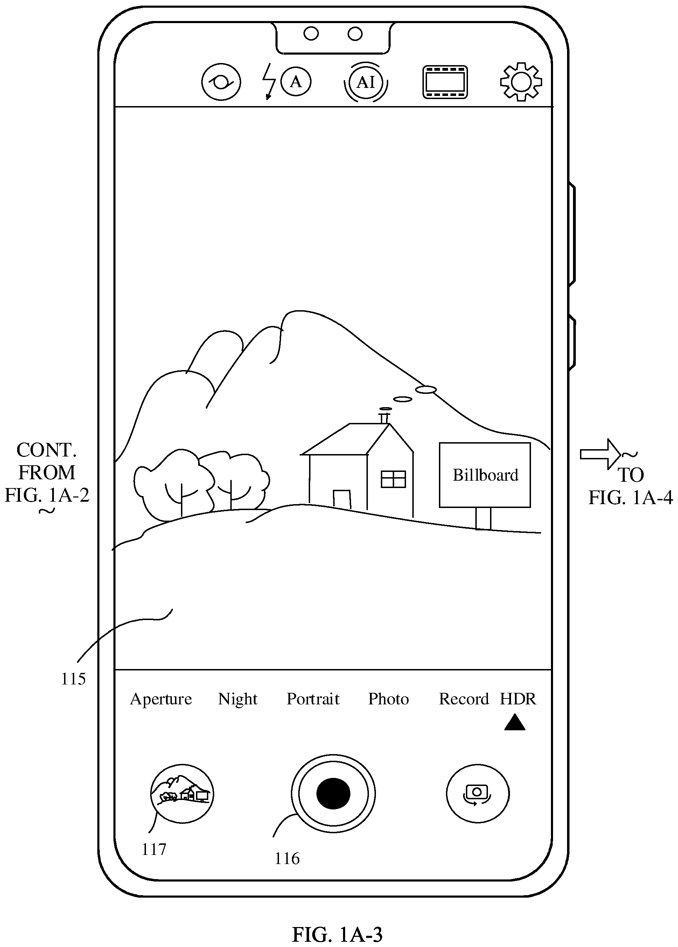

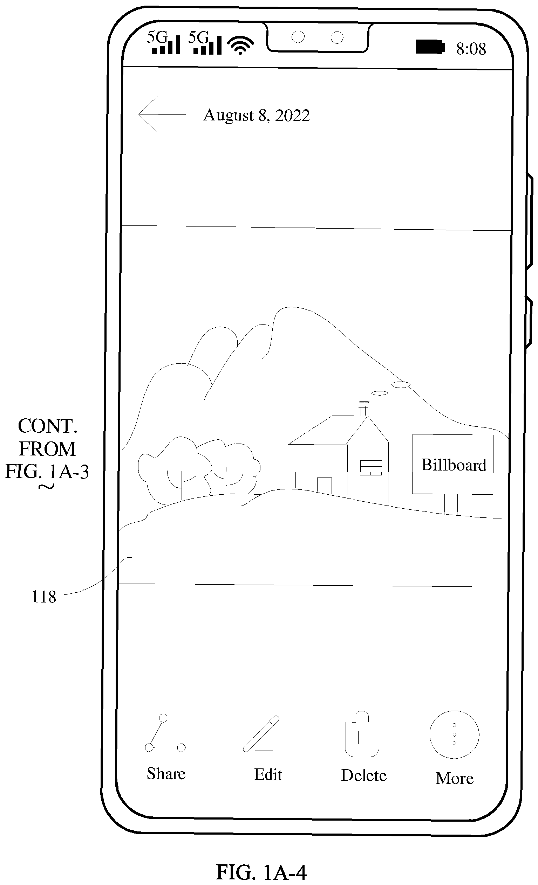

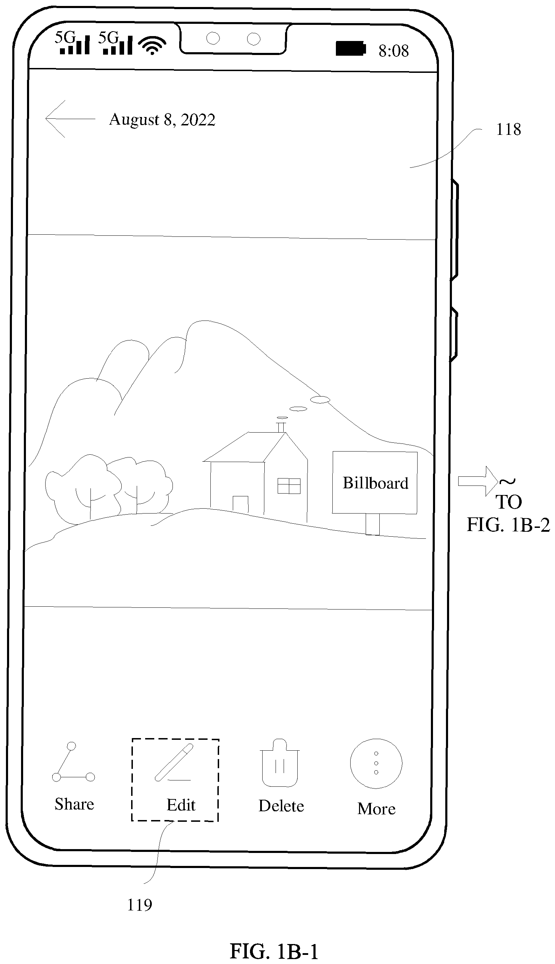

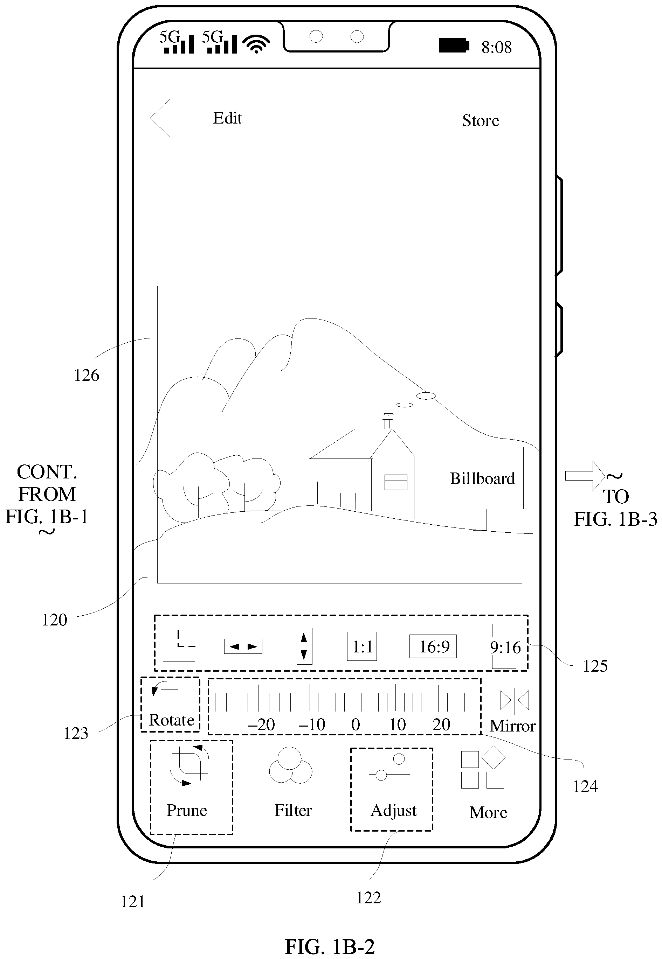

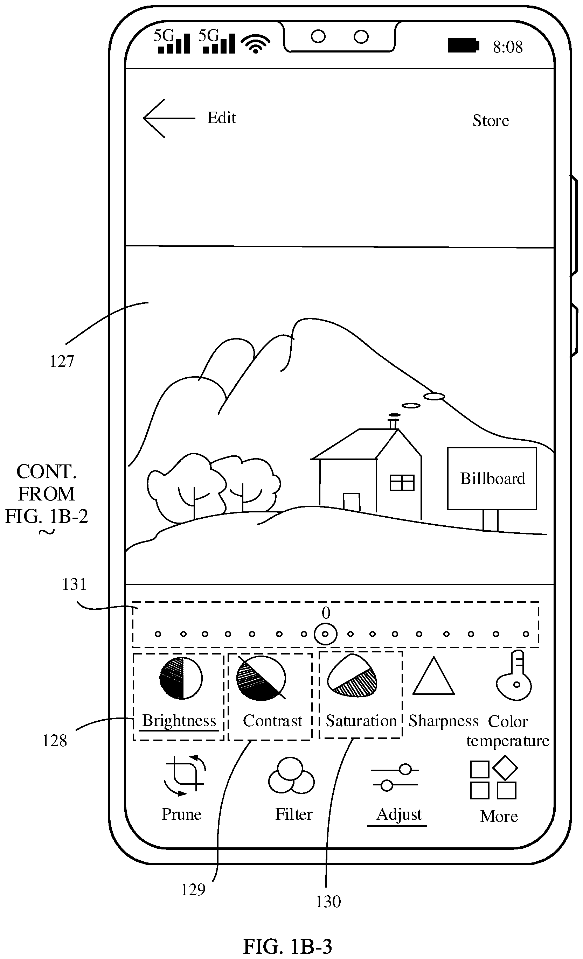

FIG. 3A-1 to FIG. 3A-5 are diagrams of a watermark operation on an HDR image according to an embodiment of this application;
FIG. 3B-1 and FIG. 3B-2 are other diagrams of a watermark operation on an HDR image according to an embodiment of this application;

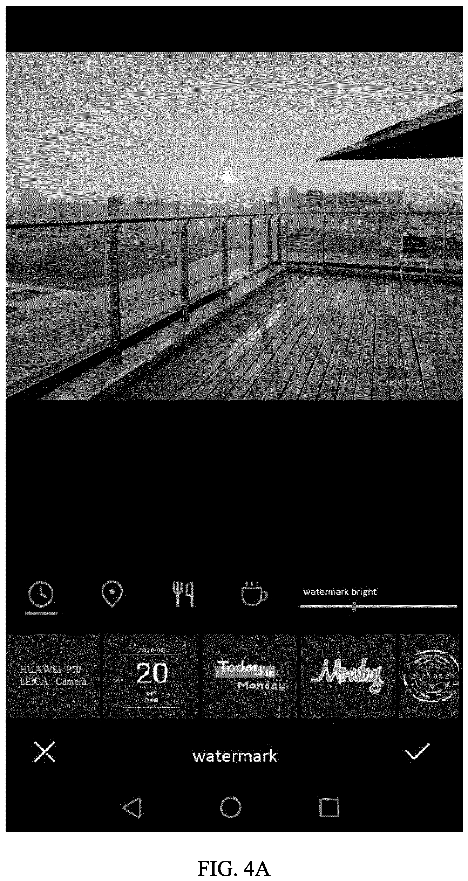

FIG. 4A is a diagram of an HDR image display interface according to an embodiment of this application;

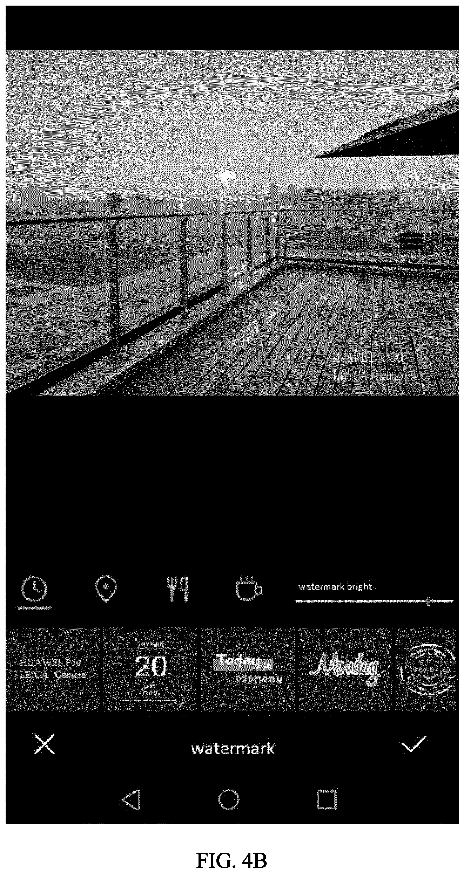

FIG. 4B is another diagram of an HDR image display interface according to an embodiment of this application;

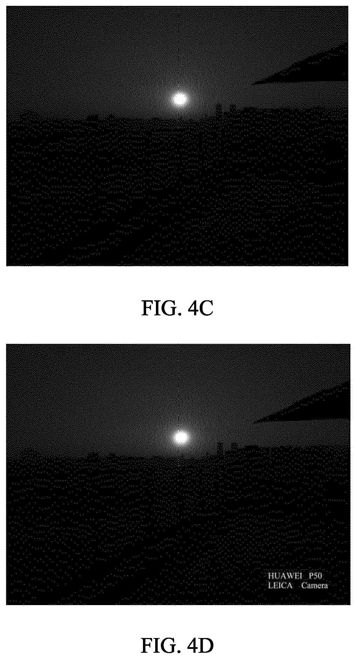

FIG. 4C is a diagram of an HDR auxiliary image corresponding to an HDR image displayed in FIG. 4A according to an embodiment of this application;
FIG. 4D is a diagram of an HDR auxiliary image corresponding to an HDR image displayed in FIG. 4B according to an embodiment of this application;

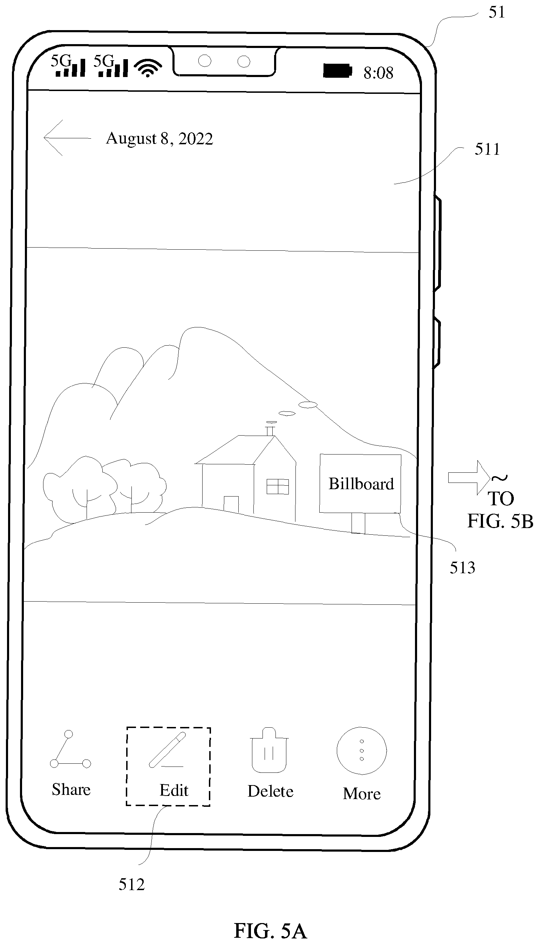

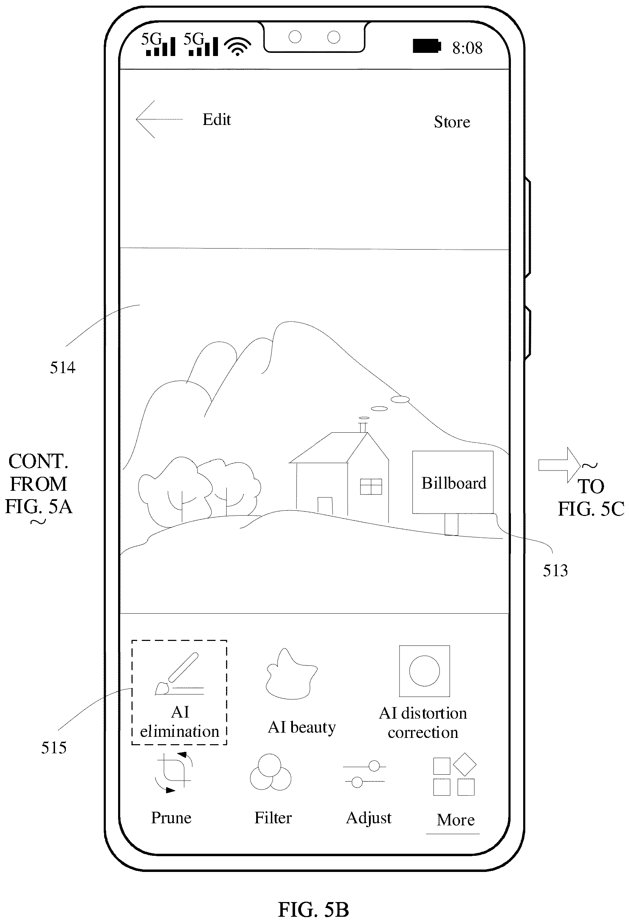

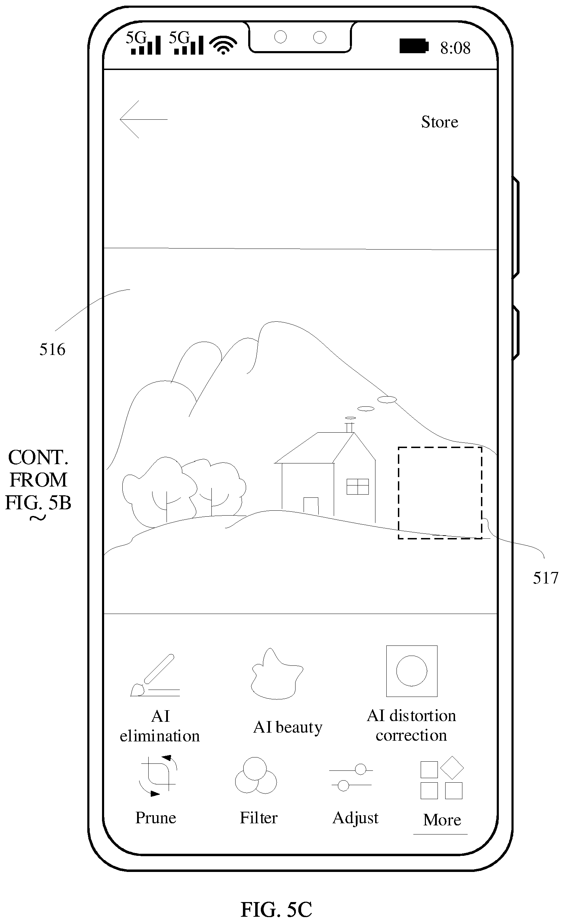

FIG. 5A to FIG. 5C are diagrams of an AI elimination operation on an HDR image according to an embodiment of this application;

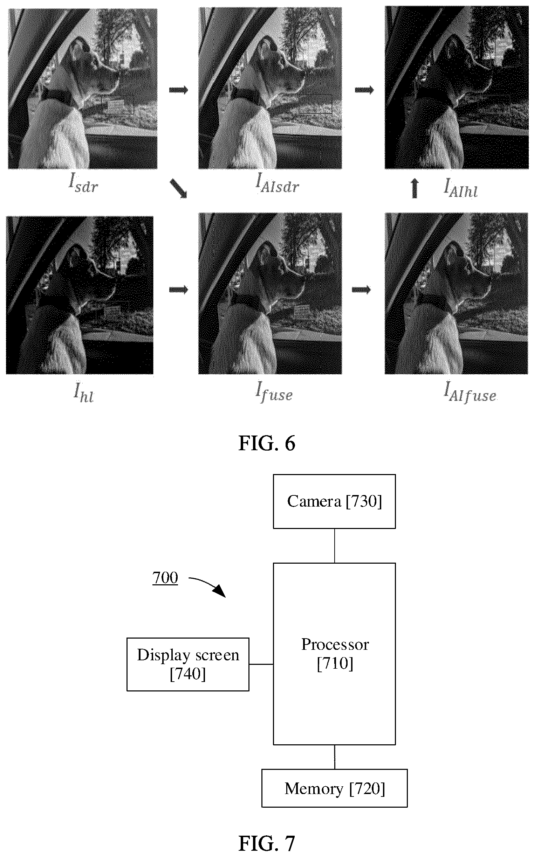

FIG. 6 is diagram of a partial AI elimination process according to an embodiment of this application;
FIG. 7 is a diagram of a structure of an electronic device 700 according to an embodiment of this application;

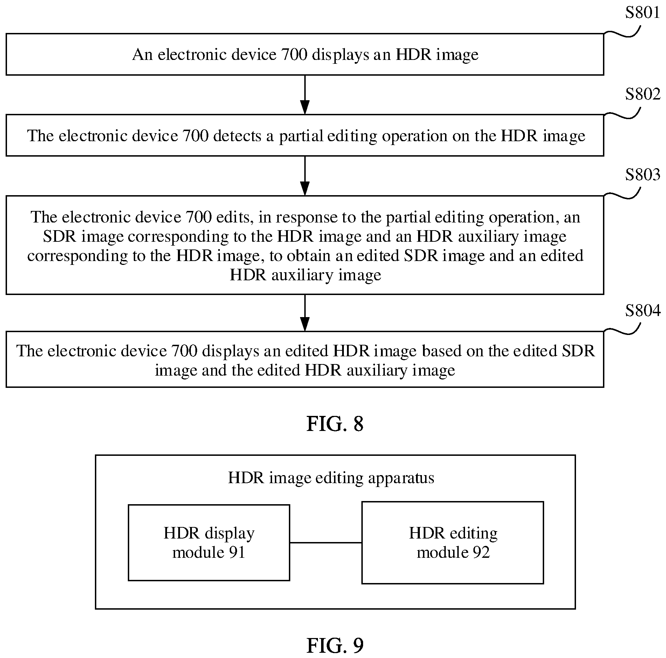

FIG. 8 is a schematic block diagram of a procedure for an HDR image editing solution according to an embodiment of this application; and
FIG. 9 is a diagram of a structure of an HDR image editing apparatus according to an embodiment of this application.

### DESCRIPTION OF EMBODIMENTS

In the following descriptions, for illustration rather than limitation, specific details such as a particular system structure and technology are provided, to thoroughly understand embodiments of this application.

The following describes related content that may be involved in embodiments of this application.

In an HDR imaging phase, an electronic device usually quickly and continuously photographs a plurality of images with different exposure degrees by using different exposure parameters, and then synthesizes the plurality of images with the different exposure degrees, to obtain an HDR image.

The exposure parameters are used to represent a total amount of light of an object received by an image system when the electronic device photographs the object, and may include an exposure time, an exposure intensity, and the like. Generally, values of the exposure parameters may determine a brightness value of an image. When the exposure time is long or the exposure intensity is high, the image system of the electronic device admits a large amount of light, and brightness of the photographed image is high. When the exposure time is short or the exposure intensity is low, the image system of the electronic device admits a small amount of light, and brightness of the photographed image is low.

For example, after obtaining three images, namely, an underexposure image, a normal exposure image, and an overexposure image, through photographing by using the image system, a mobile phone synthesizes the three images into one HDR image.

The HDR image records brightness values in actual scenarios at more than 256 levels, and is usually a digital image of more than 8 bits. For example, the HDR image is usually a 10-bit or 12-bit digital image. Currently, there are several HDR standards. For example, a bit depth of HDR10 is 10 bits, a bit depth of HDR10+ ranges from 10 bits to 16 bits, and a bit depth of Dolby Vision is greater than 12 bits.

However, a digital image stored on the electronic device is usually an 8-bit digital image, and the 8-bit digital image can record only brightness values at 256 levels. Therefore, the electronic device usually performs dynamic range compression on an HDR image by using a tone mapping (Tone-Mapping) algorithm, to compress the HDR image into 8-bit JPG data and store the data. Due to a grayscale limitation of the 8-bit data, in this tone compression manner, only visible content is increased but an actual dynamic range of an image is not extended.

In specific application, in an HDR imaging process, the electronic device first synthesizes a plurality of images with different exposure degrees to obtain a synthesized image; maps the synthesized image to an 8-bit standard dynamic range (Standard Dynamic Range, SDR) image through tone mapping, stores the SDR image, and establishes a correspondence between an HDR image and the SDR image; and after obtaining the synthesized image, obtains middle-light and highlight parts in the synthesized image to generate a high dynamic range layer (High Dynamic Range Layer, HDR Layer), stores the HDR layer, and establishes a correspondence between the HDR image and the HDR layer. The HDR layer is a grayscale image used to record a real brightness contrast of the highlight part of the synthesized image, and may also be referred to as an HDR auxiliary image.

The electronic device restores the HDR image based on the SDR image and the HDR auxiliary image by using an HDR display algorithm, to implement an HDR display function on a display terminal. In other words, during HDR display, the electronic device fuses the SDR image and the HDR auxiliary image, to restore a real brightness contrast as much as possible. Therefore, HDR image photographing and HDR display of the electronic device need to depend on the SDR image and the HDR auxiliary image.

For example, refer to a diagram of photographing an HDR image shown in FIG. 1A-1 to FIG. 1A-4. The electronic device is specifically a mobile phone 11, and the mobile phone 11 supports HDR imaging and an HDR display function. A home screen of the mobile phone 11 includes applications such as AI Life, Settings, Calendar, Camera 111, Notepad, and Gallery 112. A user taps an icon of Camera 111 to start the camera. After detecting a tap operation on the Camera 111, the mobile phone 11 displays a photographing preview interface 113 in response to the tap operation. An image captured by a camera is displayed in a viewfinder frame of the photographing preview interface 113, and the viewfinder frame further includes an HDR control 114. The user may tap the HDR control 114 to enter an HDR mode.

After detecting a tap operation on the HDR control 114, the mobile phone 11 enters the HDR mode in response to the tap operation, and displays an HDR preview interface 115. In the HDR mode, the mobile phone 11 obtains an HDR image through photographing by using an HDR imaging technology, restores, by using an HDR display algorithm, the HDR image based on an SDR image and an HDR auxiliary image that are corresponding to the HDR image, and displays the HDR image in a viewfinder frame of the HDR preview interface 115. It can be understood that, compared with the image displayed in the viewfinder frame of the photographing preview interface 113, the image displayed in the viewfinder frame of the HDR preview interface 115 has a higher contrast and richer brightness levels. Then, an HDR display effect is implemented on a display terminal.

After detecting a tap operation performed by the user on a photographing control 116, the mobile phone 11 outputs an HDR image based on an HDR preview video data stream in response to the tap operation, and displays a thumbnail of the output image on a control 117. After detecting a tap operation on the control 117, the mobile phone 11 displays an interface 118 in response to the tap operation. The photographed HDR image is displayed on the interface 118. It can be understood that the mobile phone 11 performs HDR display based on the SDR image and the HDR auxiliary image that are corresponding to the HDR image, to ensure an HDR display effect of the HDR image on the interface 118.

It should be noted that, the electronic device may obtain the HDR image through photographing in the manner shown in FIG. 1A-1 to FIG. 1A-4, or may obtain the HDR image by receiving an external input of the HDR image. Alternatively, the electronic device may not separately set an HDR mode. Instead, the electronic device automatically determines whether an HDR mode needs to be enabled in a current photographing scenario, and when determining that the HDR mode needs to be enabled, automatically obtains the HDR image through photographing by using the HDR imaging technology.

After the electronic device obtains the HDR image, the user may perform a global editing operation on the HDR image based on a global editing function that is used for an HDR image and that is supported by the electronic device.

For example, refer to a diagram of a global editing operation on an HDR image shown in FIG. 1B-1 to FIG. 1B-3. Based on the scenario in FIG. 1A-1 to FIG. 1A-4, after the mobile phone 11 obtains the HDR image through photographing by using the HDR imaging technology, the user taps an editing control 119 on the interface 118 to enter an editing interface.

After detecting a tap operation on the editing control 119, the mobile phone 11 displays an editing interface 120 in response to the tap operation. The editing interface 120 includes a pruning (namely, cropping) control 121, a filter control, an adjustment control 122, a rotation control 123, a mirror control, and the like, and further includes an adjustment bar 124 configured to adjust a rotation angle, a series of controls 125 configured to adjust a cropping ratio and the like, and a cropping box 126. In this case, the editing interface 120 is an interface corresponding to a pruning operation.

The series of controls 125 are configured to adjust a location, a size, a proportion, and the like of the cropping box 126. For example, when the user taps a button "16:9" in the series of controls 125, the mobile phone 11 adjusts the proportion of the cropping box 126 to 16:9. The cropping box 126 is configured to select a part of an image to be cropped.

The user may perform a cropping operation and a rotation operation on the HDR image through the editing interface 120. Specifically, the user inputs the rotation angle by using the adjustment bar 124. In response to an operation performed by the adjustment bar 124, the mobile phone 11 displays, on the interface, an HDR image obtained through rotation by a corresponding angle is performed, and maintains an HDR display effect. Likewise, the mobile phone 11 displays a cropped HDR image on the interface based on a cropping location and a cropping ratio in response to an operation performed by the user on the series of controls 125, and maintains an HDR display effect.

If the user needs to adjust global brightness, a global contrast, a global tone, global saturation, and the like of the HDR image, the user may tap the adjustment control 122 on the editing interface 120. The mobile phone 11 displays an editing interface 127 in response to a tap operation on the adjustment control 122. The editing interface 127 includes a brightness adjustment control 128, a contrast adjustment control 129, a saturation adjustment control 130, a sharpness adjustment control, a color temperature adjustment control, and the like, and further includes a value adjustment bar 131 configured to adjust a global brightness value, a global contrast value, a global saturation value, and the like.

As shown in FIG. 1B-1 to FIG. 1B-3, the user may adjust the global brightness of the HDR image by adjusting the value adjustment bar 131. The mobile phone 11 determines the global brightness value of the HDR image in response to the adjustment operation performed by the value adjustment bar 131; adjusts, based on the global brightness value, global brightness of an SDR image corresponding to the HDR image, to obtain global brightness-adjusted SDR image; and then displays global brightness-adjusted HDR image based on the global brightness-adjusted SDR image and an HDR auxiliary image by using an HDR display algorithm, and maintains an HDR display effect. Likewise, the user may also adjust the global contrast, the global saturation, and the like of the HDR image.

The foregoing global editing operation on the HDR image is mainly targeted for global change adjustment to the HDR image, or operations such as cropping and rotation that are unrelated to image content, and does not support a partial editing operation on the HDR image.

In the HDR image editing solution provided in this embodiment of this application, when the user performs a partial editing operation on the HDR image, the electronic device synchronously edits the SDR image and the HDR auxiliary image that are corresponding to the HDR image, displays a partial editing-processed HDR image based on an edited SDR image and an edited HDR image by using the HDR display algorithm, and maintains an HDR display effect. In other words, in this embodiment of this application, a partial editing function for the HDR image is implemented while HDR display is supported, to meet a partial editing requirement of the user for the HDR image.

The partial editing operation is relative to the global editing operation, and may be an editing operation performed on a partial area in the HDR image. For example, the partial editing operation may include but is limited to a partial smearing overlay operation and a partial AI editing operation.

The partial smearing overlay operation is an operation of smearing or overlaying at least one of the following smearing overlay patterns: a line, a text, graphics, and the like on the partial area in the HDR image, and may include but is not limited to a watermark operation, a doodle operation, a mosaic operation, and a sticker operation. It should be noted that the partial smearing overlay operation may include one or a series of user operations, a function of the partial smearing overlay operation is to add a smearing overlay pattern to a corresponding area in the HDR image, and the partial smearing overlay operation may be a related operation for achieving a purpose of partial smearing overlay. For example, for a watermark adding operation, the partial smearing overlay operation includes a series of operations such as tapping and dragging. The smearing overlay pattern may also be referred to as a smearing overlay layer.

For the partial smearing overlay operation, after detecting the partial smearing overlay editing operation, the electronic device edits, in response to the partial smearing overlay editing operation, the SDR image corresponding to the HDR image, to obtain the edited SDR image; edits the HDR auxiliary image corresponding to the HDR image, to obtain an edited HDR auxiliary image; and finally displays the edited HDR image based on the edited SDR image and the edited HDR auxiliary image.

In some embodiments, the editing the SDR image includes: adding the smearing overlay pattern to a first target area in the SDR image, where the first target area is an area that is in the SDR image and that is corresponding to a smearing overlay area in the HDR image. The editing the HDR auxiliary image includes: adding an image overlay pattern to a second target area in the HDR auxiliary image, where the second target area is an area that is in the HDR auxiliary image and that is corresponding to the smearing overlay area in the HDR image. An image overlay area in the HDR image is an area on which the smearing overlay operation is performed in the HDR image. For example, if the user adds a watermark pattern to an area in the HDR image, the area is an area on which the smearing overlay operation is performed, that is, the foregoing smearing overlay area.

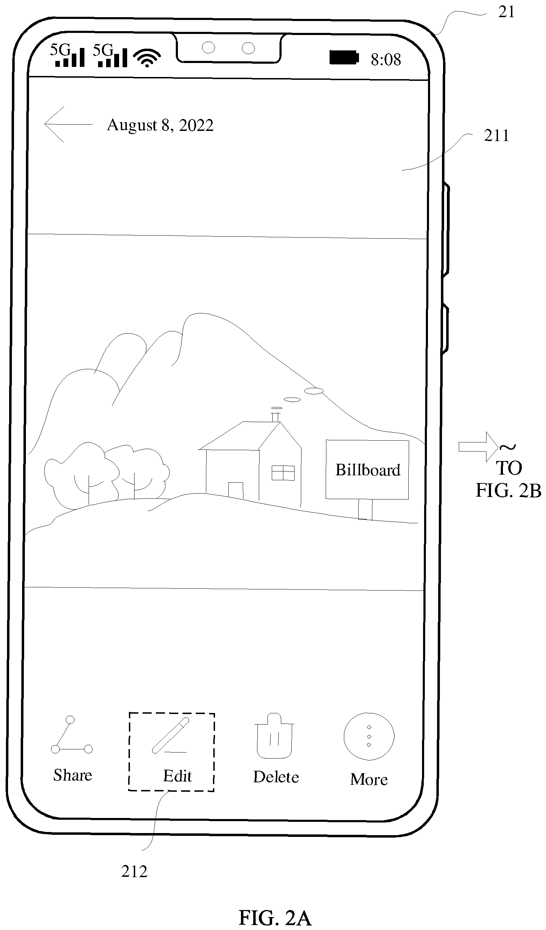

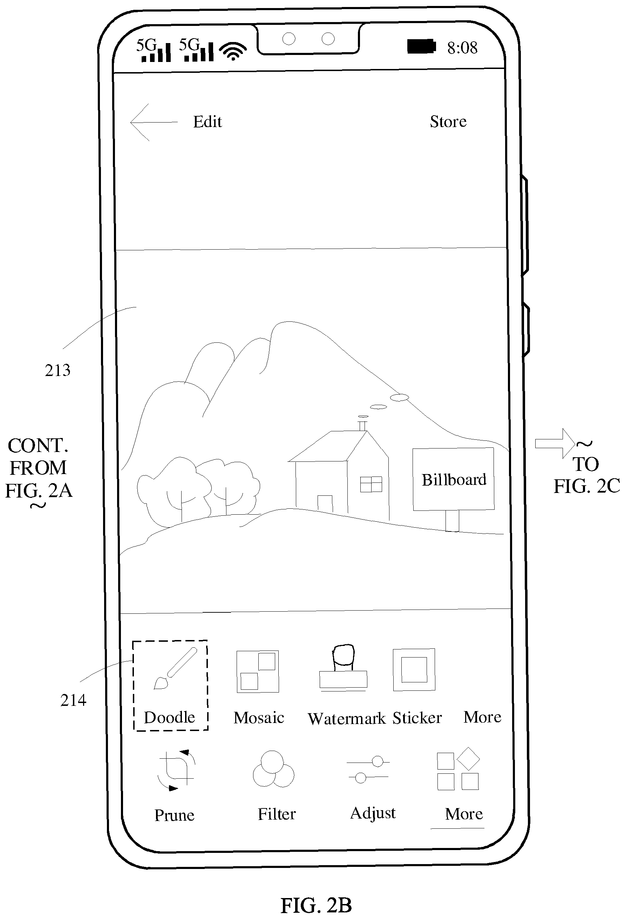

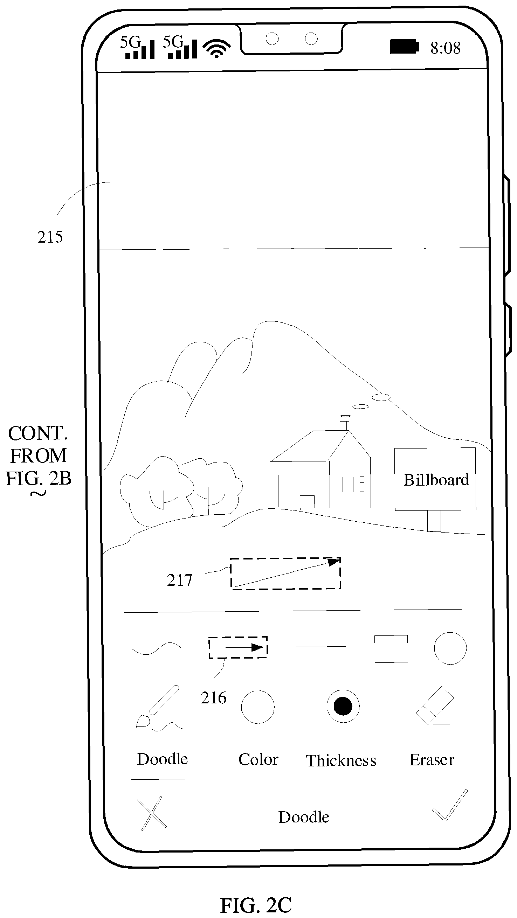

For example, refer to a diagram of a doodle operation on an HDR image shown in FIG. 2A to FIG. 2C. A mobile phone 21 displays the HDR image on an interface 211, and the interface 211 further includes an editing control 212. The mobile phone 21 displays, by using an HDR display algorithm, the HDR image on the interface 211 based on an original SDR image and an original HDR auxiliary image that are corresponding to the HDR image.

If a user needs to edit the HDR image displayed by the mobile phone 21, the user manually taps the editing control 212. After detecting a tap operation on the editing control 212, the mobile phone 21 displays an editing interface 213 in response to the tap operation. The editing interface 213 includes a doodle control 214, a mosaic control, a watermark control, a sticker control, and the like.

If the user needs to perform a doodle operation on the HDR image displayed by the mobile phone 21, the user manually taps the doodle control 214. After detecting a tap operation on the doodle control, the mobile phone 21 displays a doodle editing interface 215 in response to the tap operation. The doodle editing interface 215 includes controls such as a doodle control, a color control, a thickness control, and an eraser control. The user may determine, by using these controls, line graphics, a color of the line graphics, a thickness of the line, and the like that are used for doodling. As shown in FIG. 2A to FIG. 2C, the user selects line graphics of a line segment 216 with an arrow to doodle. After selecting the line graphics used for doodling, the user slides on a touchscreen of the mobile phone 21 by using a finger, to draw a doodle pattern 217 in FIG. 2A to FIG. 2C.

In a process in which the user draws the doodle pattern 217, after detecting a touch operation performed by a finger of the user on a touchscreen, the mobile phone 21 determines, in response to the touch operation, an area on which the doodle operation is performed, that is, determines a smearing overlay area in the HDR image; then, adds the doodle pattern 217 to a first target area in the original SDR image to obtain an edited SDR image, and adds the doodle pattern 217 to a second target area in the original HDR auxiliary image to obtain an edited HDR auxiliary image; and finally performs HDR display based on the edited SDR image and the edited HDR auxiliary image to display, on the interface 215, an HDR image to which the doodle pattern 217 has been added, and maintains an HDR display effect of the HDR image on which the doodle operation has been performed. In this way, the doodle operation on the HDR image is implemented while the HDR display effect is supported.

For ease of description, the following uses the first target area to represent an area that is in the SDR image and that is corresponding to the smearing overlay area in the HDR image, and uses the second target area to represent an area that is in the HDR auxiliary image and that is corresponding to the smearing overlay area in the HDR image.

It should be noted that, when the user performs a partial smearing overlay operation on the HDR image, if the electronic device edits only the SDR image, that is, adds a smearing overlay pattern only to the first target area in the SDR image, the smearing overlay pattern may cross different brightness areas in the HDR auxiliary image. Consequently, during display of the edited HDR image, display brightness distribution of smearing overlay patterns such as a watermark, a mosaic, a doodle, and a sticker on the HDR image is uneven, and an HDR display effect is abnormal. In contrast, in this embodiment of this application, the smearing overlay pattern is synchronously added to the first target area in the SDR image and the second target area in the HDR auxiliary image, to synchronously edit the SDR image and the HDR auxiliary image. In this way, during display of the edited HDR image, display brightness distribution of smearing overlay patterns such as a watermark, a mosaic, a doodle, and a sticker on the HDR image is even.

In addition, in the foregoing embodiment, when the user performs the partial smearing overlay operation on the HDR image, although the electronic device synchronously adds the smearing overlay pattern to the first target area in the SDR image and the second target area in the HDR auxiliary image, the electronic device does not process a pixel brightness value of the second target area in the HDR auxiliary image. In this case, the original pixel brightness value of the second target area may be directly used. In this manner, although a partial editing function for the HDR image can be implemented while the HDR display effect is supported, the display effect of the edited HDR image is undesirable, or a brightness value of the smearing overlay pattern may be inconsistent with a brightness value needed by a user. As a result, user experience is degraded. In some cases, when the user performs the partial smearing overlay operation on the HDR image, if the electronic device synchronously adds the smearing overlay pattern to the first target area in the SDR image and the second target area in the HDR auxiliary image and also directly sets a pixel brightness value of the second target area in the HDR auxiliary image to 0, during display of the edited HDR image, smearing overlay patterns such as a watermark, a mosaic, a doodle, and a sticker appear to be dim in an area with a large HDR brightness gain, and the display effect is undesirable. To further improve the display effect of the edited HDR image, the electronic device synchronously adds the smearing overlay pattern to the first target area in the SDR image and the second target area in the HDR auxiliary image and also processes the pixel brightness value of the second target area in the HDR auxiliary image, that is, sets a pixel brightness value of an area in which the smearing overlay pattern in the HDR auxiliary image is located to a specific non-zero value. The specific value may be determined autonomously by the electronic device, or may be user-defined.

When the specific value is determined autonomously by the electronic device, the electronic device determines the specific value by using an algorithm. For example, the electronic device calculates an average brightness value of the area (namely, the second target area) in which the smearing overlay pattern in the HDR auxiliary image is located, and uses the average brightness value as the specific value.

Certainly, the electronic device may alternatively adjust the pixel brightness value of the second target area in the HDR auxiliary image to a preset brightness value. The preset brightness value is preset.

It can be understood that, for the HDR auxiliary image, no new layer is added in the smearing overlay operation, and the smearing overlay pattern corresponding to the smearing overlay operation overlays an image value of a corresponding area in the HDR auxiliary image. Therefore, a meaning of adjusting the pixel brightness value of the smearing overlay area in the HDR auxiliary image is the same as that of adjusting the pixel brightness value of the second target area in the HDR auxiliary image, and the two types of adjustment manners are both intended to adjust the brightness value of the added smearing overlay pattern.

When the specific value is user-defined, the electronic device may further display a brightness adjustment control on an HDR image display interface. After performing the partial smearing overlay operation on the HDR image display interface, the user may further manually adjust, by using the brightness adjustment control, the brightness value of the area in which the smearing overlay pattern in the HDR auxiliary image is located. In this case, after displaying the HDR image to which the smearing overlay pattern has been added, the electronic device further sets, in response to an adjustment operation performed by the brightness adjustment control, a brightness value of an area in which the smearing overlay pattern in the edited HDR auxiliary image is located to a corresponding value, to obtain a brightness-adjusted HDR auxiliary image, where the corresponding value is determined based on a user adjustment operation; and then performs HDR display based on the brightness-adjusted HDR auxiliary image and the SDR image to which the smearing overlay pattern has been added, to display a brightness-adjusted HDR image to which the smearing overlay pattern has been added. An adjustment range of the brightness adjustment control may be from a maximum brightness value of the HDR auxiliary image to a minimum brightness value of the HDR auxiliary image. For example, a maximum value of the brightness adjustment control is equal to the maximum brightness value of the HDR auxiliary image, and a minimum value of the brightness adjustment control is equal to the minimum brightness value of the HDR auxiliary image. Certainly, alternatively, an adjustment range of the brightness adjustment control may not be dependent on brightness values of the HDR auxiliary image. The adjustment range of the brightness adjustment control is not limited herein.

Comparatively speaking, the brightness adjustment control is configured, so that the user defines the brightness value of the smearing overlay pattern by using the brightness adjustment control. In this way, HDR display for the user-defined brightness of the area in which the smearing overlay pattern is located can be implemented, and user experience is better. It can be understood that the brightness adjustment control may not be displayed on the HDR image display interface. A display location and a representation form of the brightness adjustment control are not limited herein.

For example, refer to a diagram of a watermark operation on an HDR image shown in FIG. 3A-1 to FIG. 3A-5. A mobile phone 31 displays the HDR image on an interface 311, and the interface 311 further includes an editing control 312. The mobile phone 31 displays, by using an HDR display algorithm, the HDR image on the interface 311 based on an original SDR image and an original HDR auxiliary image that are corresponding to the HDR image.

If a user needs to edit the HDR image displayed by the mobile phone 31, the user manually taps the editing control 312. The mobile phone 31 displays an editing interface 313 in response to a tap operation on the editing control 312. The editing interface 313 includes a doodle control, a mosaic control, a watermark control 314, a sticker control, and the like. In this case, if the user needs to add a watermark to the HDR image, the user taps the watermark control 314.

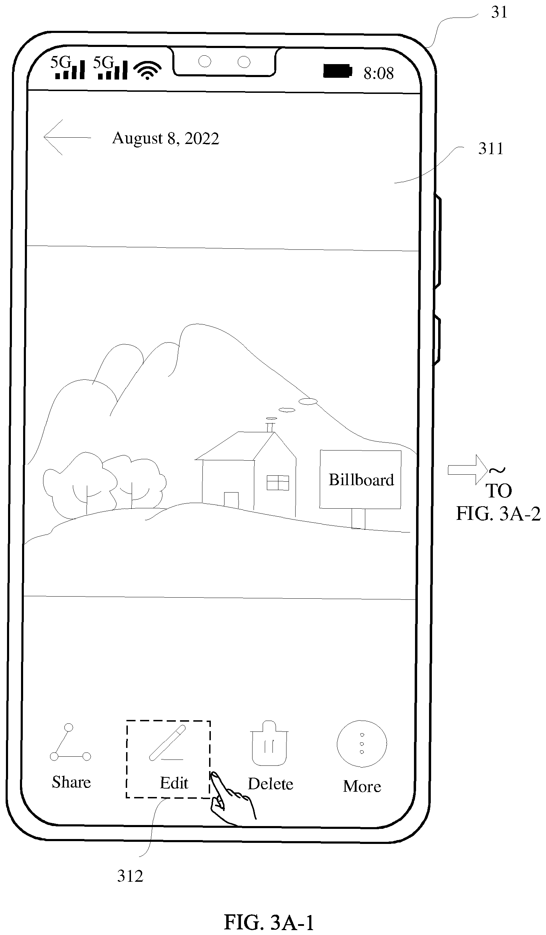

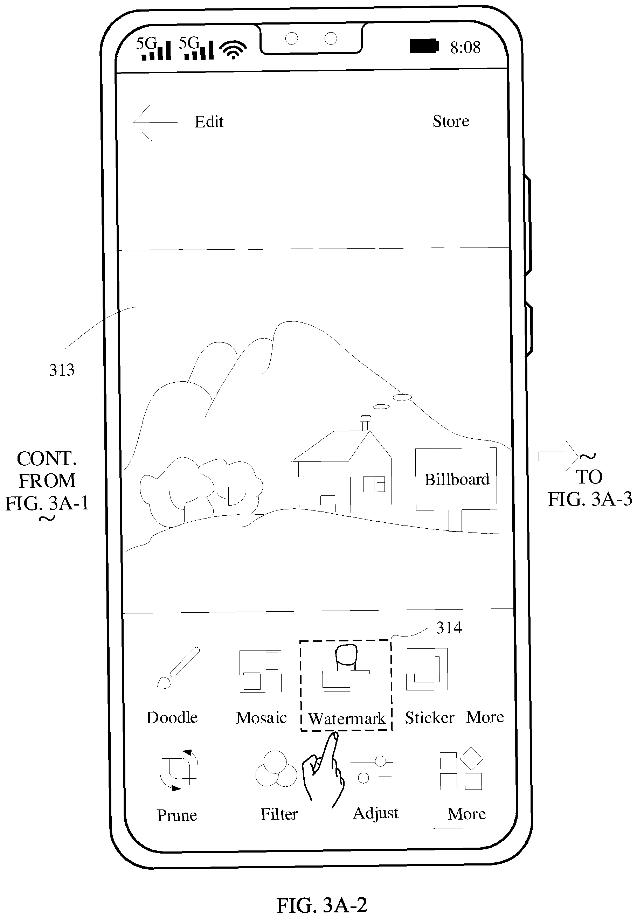

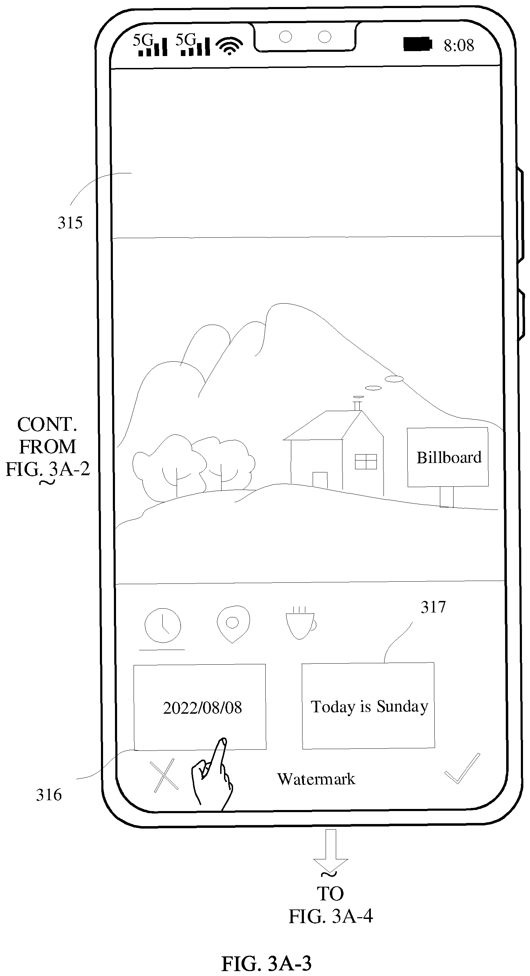

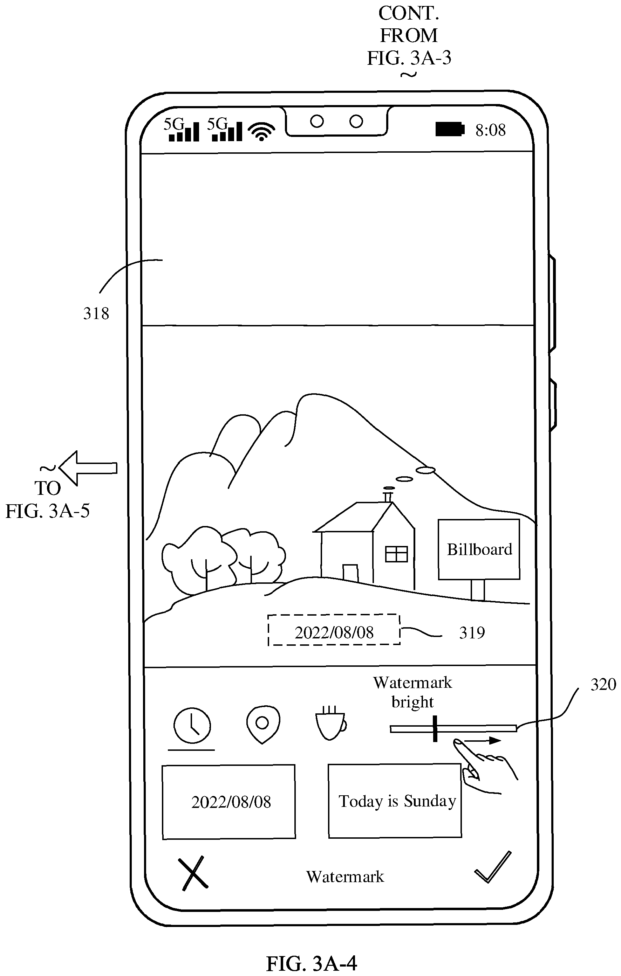

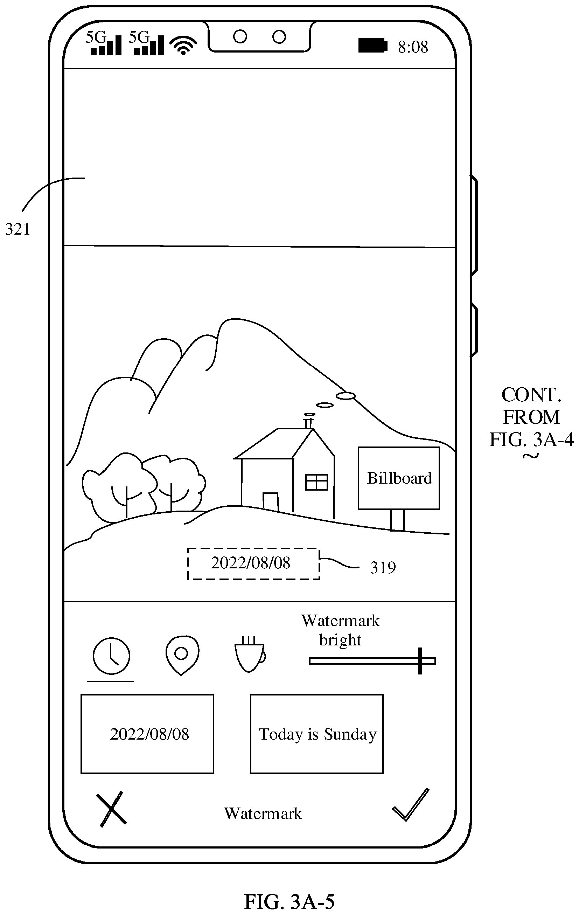

The mobile phone 31 displays an editing interface 315 in response to a tap operation on the watermark control 314. The editing interface 315 includes three types of watermarks: a time watermark, a location watermark, and a scenario watermark. FIG. 3A-3 shows an example of time watermarks including a watermark pattern 316 and a watermark pattern 317. The user may manually tap or drag the watermark patterns displayed on the editing interface 315, to add time watermark patterns to corresponding areas in the HDR image displayed on the editing interface 315.

The mobile phone 31 determines a display location of the watermark pattern 316 in the HDR image in response to a tap operation performed by the user on the watermark pattern 316, that is, determines a smearing overlay area in the HDR image. When the user manually drags the watermark pattern to a corresponding location on the interface 315, the mobile phone 31 determines the smearing overlay area in the HDR image by detecting the location on which a drag operation is performed; or when the user taps the watermark pattern, determines the smearing overlay area in the HDR image based on a preset display location of the watermark pattern.

It can be understood that the HDR images displayed on the interface 311, the editing interface 313, and the editing interface 315 are all displayed based on the original SDR image and the original HDR auxiliary image, and HDR display effects of the HDR images are all maintained.

After determining the smearing overlay area in the HDR image, the mobile phone 31 adds the watermark pattern 316 to a first target area in the original SDR image to obtain an edited SDR image, and adds the watermark pattern 316 to a second target area in the original HDR auxiliary image to obtain an edited HDR auxiliary image. Both the edited SDR image and the edited HDR auxiliary image are images to which the watermark pattern 316 has been added. Then, HDR display is performed based on the edited SDR image and the edited HDR auxiliary image, to display, on an editing interface 318, an HDR image to which the watermark pattern 316 has been added.

The HDR image displayed on the editing interface 318 includes an added watermark 319 and a watermark brightness slider bar 320 that is used for adjusting a brightness value of the watermark 319. The watermark brightness slider bar 320 is the foregoing brightness adjustment control. The user may pull a sliding control leftwards or rightwards on the watermark brightness slider bar 320 to increase or decrease the brightness value of the watermark 319 added to the HDR image. In the example in FIG. 3A-4, on the watermark brightness slider bar 320, pulling the sliding control leftwards is to decrease brightness of the watermark 319, and pulling the sliding control rightwards is to increase the brightness of the watermark 319.

It should be noted that the sliding control on the watermark brightness slider bar 320 is at an initial location at the beginning, that is, the watermark has an initial brightness value. The initial brightness value may be preset, that is, a brightness value is preset for each watermark. If the user feels that an initially given watermark brightness value is inappropriate, the user may increase or decrease the watermark brightness by using the watermark brightness slider bar 320. Certainly, alternatively, the initial brightness value may be set based on an average brightness value of the second target area in the HDR auxiliary image, or the initial brightness value is invariably set to the average brightness value of the HDR auxiliary image. A manner of setting the initial brightness value is not limited herein.

In the example in FIG. 3A-4, if the user wants to increase the brightness of the watermark 319, the user pulls the sliding control rightwards on the watermark brightness slider bar 320 of the editing interface 318. In response to an operation performed by the user on the watermark brightness slider bar 320, the mobile phone 31 determines an adjusted watermark brightness value, sets a brightness value of the area in which the watermark pattern in the edited HDR auxiliary image is located to the adjusted watermark brightness value to obtain a brightness-adjusted HDR auxiliary image, and then performs HDR display based on the brightness-adjusted HDR auxiliary image and the edited SDR image, to display, on an editing interface 321, an HDR image on which the brightness of the watermark 319 has been adjusted, and maintains an HDR display effect.

In the example shown in FIG. 3A-1 to FIG. 3A-3, before the user adds the watermark pattern to a corresponding location on an HDR image display interface, the mobile phone 31 does not display the watermark brightness slider bar 320. The watermark brightness slider bar 320 is displayed on an HDR interface only after the watermark 319 is added to an HDR pattern. In this way, the user can adjust the watermark brightness value by using the watermark brightness slider bar 320, after adding the watermark. In other words, a brightness value of the smearing overlay pattern can be adjusted by using the brightness adjustment control, only after the smearing overlay pattern is added. In some other cases, before adding the smearing overlay pattern, the user can alternatively set a brightness value of the smearing overlay pattern by using the brightness adjustment control.

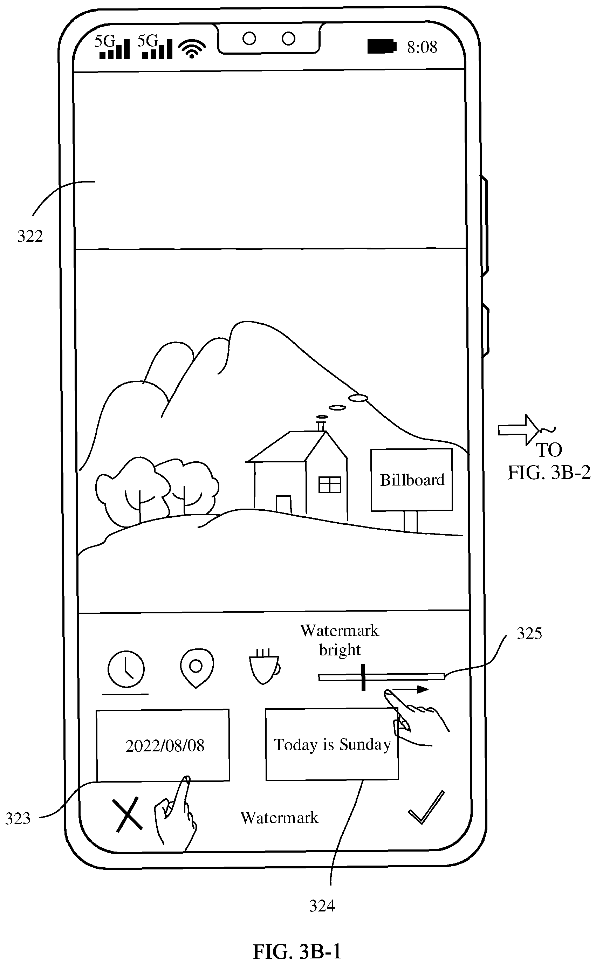

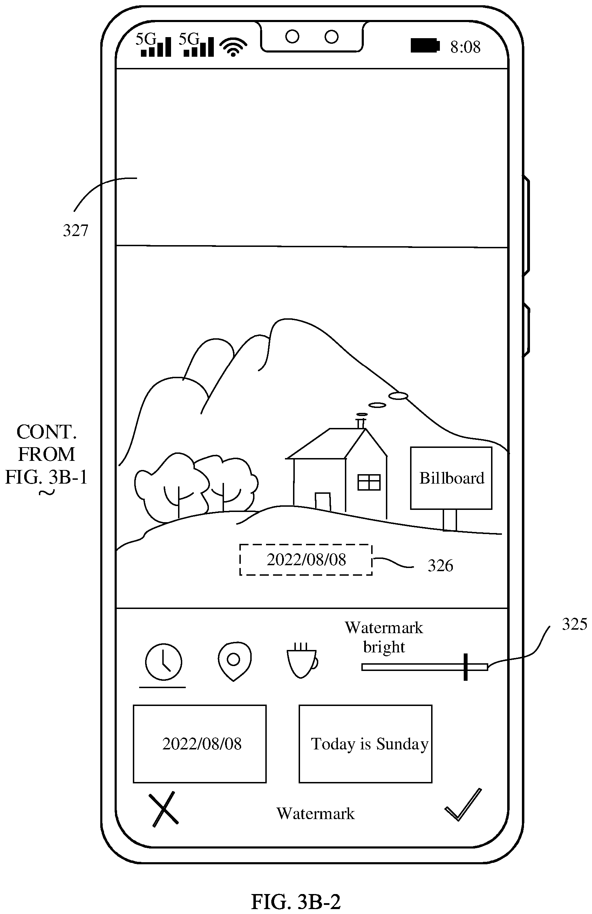

For example, refer to another diagram of a watermark operation on an HDR image shown in FIG. 3B-1 and FIG. 3B-2. Based on the scenario in FIG. 3A-1 to FIG. 3A-5, after detecting a tap operation on the watermark control 314, the mobile phone 31 displays an editing interface 322. The editing interface 322 includes a watermark pattern 323, a watermark pattern 324, and a watermark brightness slider bar 325. Different from the editing interface 315 in FIG. 3A-3, the editing interface 322 in FIG. 3B-1 further has the watermark brightness slider bar 325 displayed. In this way, the user can set a brightness value of an added watermark before adding the watermark.

In the example in FIG. 3B-1 and FIG. 3B-2, before tapping or dragging the watermark patterns displayed on the editing interface 322, the user first pulls a sliding control rightwards on the watermark brightness slider bar 325, to increase a watermark brightness. The mobile phone 31 determines an adjusted brightness value in response to an operation performed by the user on the watermark brightness slider bar 325.

After setting the brightness value of the added watermark by using the watermark brightness slider bar 325, the user continues to tap or drag the watermark pattern 323, to add the watermark pattern 323 to a corresponding area in the HDR image. In response to an operation performed by the user on the watermark pattern 323, the mobile phone 31 adds the watermark pattern 323 to a first target area in an original SDR image to obtain an edited SDR image; adds the watermark pattern 323 to a second target area in an original HDR auxiliary image, and sets a brightness value of the second target area to an adjusted brightness value, to obtain an edited HDR auxiliary image; and then performs HDR display based on the edited SDR image and the edited HDR auxiliary image, to display, on an editing interface 327, an HDR image to which a watermark 326 has been added, and maintains an HDR display effect.

It can be understood that, before adding the smearing overlay pattern, the user can set a brightness value of the smearing overlay pattern by using the brightness adjustment control. After adding the smearing overlay pattern based on the brightness value specified by the user, the user may further continue to adjust the brightness value of the smearing overlay pattern by using the brightness adjustment control. For example, in the example in FIG. 3B-2, the user may further adjust brightness of the watermark 326 again by adjusting the watermark brightness slider bar 325 on the editing interface 327.

It can be learned from the examples in FIG. 3A-1 to FIG. 3A-5, FIG. 3B-1, and FIG. 3B-2 that, for a watermark adding operation on the HDR image, the mobile phone 31 synchronously modifies the SDR image and the HDR auxiliary image, and further provides the watermark brightness slider bar for the user to define the watermark brightness; and when the user adjusts the watermark brightness, the mobile phone 31 further modifies the brightness value of the area in which the watermark pattern in the HDR auxiliary image is located, to implement an HDR display effect.

The following uses watermark brightness adjustment scenarios shown in FIG. 4A to FIG. 4D as examples for description.

FIG. 4A is a diagram of an HDR image display interface, FIG. 4B is another diagram of an HDR image display interface, FIG. 4C is a diagram of an HDR auxiliary image corresponding to an HDR image displayed in FIG. 4A, and FIG. 4D is a diagram of an HDR auxiliary image corresponding to an HDR image displayed in FIG. 4B.

It can be learned through comparison between FIG. 4A and FIG. 4B that a watermark "HUAWEI P50 LEICA Camera" has been added to both FIG. 4A and FIG. 4B. In addition, a location of a sliding control on a watermark brightness bar in FIG. 4A is different from that of a sliding control on a watermark brightness bar in FIG. 4B, that is, a watermark brightness in FIG. 4A is inconsistent with that in FIG. 4B, and the watermark brightness in FIG. 4B is higher than that in FIG. 4A.

The watermark "HUAWEI P50 LEICA Camera" in FIG. 4A is lower in brightness and is unclear. The watermark "HUAWEI P50 LEICA Camera" in FIG. 4B is higher in brightness, is clearer, and has a better display effect.

It can be learned through comparison between FIG. 4C and FIG. 4D that, although a watermark has been added to an HDR auxiliary image in FIG. 4C, the watermark is unclear or invisible because of brightness. In comparison with FIG. 4C, an HDR auxiliary image in FIG. 4D has a higher watermark brightness and is clearly visible.

In specific application, in the scenarios in FIG. 4A to FIG. 4D, an electronic device displays, by using an HDR display algorithm and based on the HDR auxiliary image shown in FIG. 4C and an SDR image to which the watermark has been added, the HDR image display interface shown in FIG. 4A. After a user increases the watermark brightness by using the watermark brightness bar, the electronic device increases a watermark brightness of the HDR auxiliary image shown in FIG. 4C by a corresponding value, to obtain the HDR auxiliary image shown in FIG. 4D; and then displays, by using the HDR display algorithm and based on the HDR auxiliary image shown in FIG. 4D and an SDR image to which the watermark has been added, the HDR image display interface shown in FIG. 4B.

It can be learned from the foregoing that, for a partial smearing overlay operation, in response to the partial smearing overlay operation in this embodiment of this application, a smearing overlay pattern is synchronously added to both a first target area in the SDR image and a second target area in the HDR auxiliary image, to implement a partial smearing overlay operation on the HDR image while an HDR display effect is supported. Further, the brightness adjustment control is provided for the user to define brightness values of smearing overlay patterns, so that the user controls the brightness values of the smearing overlay patterns such as a watermark, a mosaic, a doodle, and a sticker, and controls HDR display effects of these smearing overlay patterns.

In addition to the partial smearing overlay operation, a partial editing operation on the HDR image may further include a partial AI editing operation.

The partial AI editing operation may include but is not limited to operations such as partial AI elimination, AI beauty, and AI distortion correction. AI elimination is to eliminate a target object in an image by using an AI (Artificial Intelligence, artificial intelligence) technology. AI beauty is to perform facial and body beauty on a target object in an image by using the AI technology. AI distortion correction is to perform distortion correction on an image by using the AI technology. The partial AI editing operation usually relates to image content, that is, the partial AI editing operation is an editing operation related to the image content. In addition, the partial AI editing operation may include one or a series of operations, and may be a related operation for implementing a partial AI editing function.

For the partial AI editing operation, to maintain an HDR display effect of the edited image, the SDR image and the HDR auxiliary image that are corresponding to the HDR image need to be synchronously edited. For example, for partial AI elimination, AI elimination needs to be performed on the SDR image and the HDR auxiliary image, and then HDR display is performed based on an SDR image and an HDR auxiliary image that are obtained through AI elimination. However, in a practice process, the inventor finds that an SDR image and an HDR auxiliary image that are corresponding to a same HDR image are not in a similar domain, and a boundary inconsistency problem occurs after a partial AI editing operation is separately performed on the SDR image and the HDR auxiliary image, causing an abnormal HDR display effect. Therefore, for the partial AI editing operation, image content of the HDR auxiliary image and image content of the SDR image on which HDR image display depends are significantly different from each other, and then it is difficult to synchronously perform a content-related operation on the SDR image and the HDR auxiliary image. If the electronic device simply performs a same operation on the SDR image and the HDR auxiliary image, a problem of an abnormal HDR display effect still exists.

To synchronously perform the partial AI editing operation on the SDR image and the HDR auxiliary image, avoid a boundary abnormality problem, and ensure an HDR display effect obtained through the partial AI editing operation, in this embodiment of this application, the SDR image and the HDR auxiliary image are first fused to obtain a fused image; then, the partial AI editing operation is performed on the fused image to obtain an edited fused image; and finally an HDR auxiliary image on which the partial AI editing operation has been performed is obtained through reverse calculation based on the edited fused image.

Specifically, after detecting the partial AI editing operation, the electronic device separately normalizes the SDR image and the HDR auxiliary image in response to the partial AI editing operation, and may specifically normalize brightness values of the images to a range of 0 to 1; and then performs image fusion on a normalized SDR image and a normalized HDR auxiliary image to obtain the fused image. In specific application, the SDR image and the HDR auxiliary image may be fused, by using an invertible function, into a domain that approximates to a domain of the SDR image, where the invertible function is, for example, a linear function or a multi-degree equation function. Then, the partial AI editing operation is performed on the fused image to obtain the edited fused image, and the partial AI editing operation is performed on the SDR image to obtain an edited SDR image. Finally, reverse calculation is performed based on the edited fused image and the edited SDR image, to separate the edited HDR auxiliary image from the edited fused image.

When obtaining the edited SDR image and the edited HDR auxiliary image, the electronic device displays an edited HDR image based on the two edited images by using the HDR display algorithm, so that an HDR display effect of the image on which the partial AI editing operation has been performed can still be maintained.

For example, refer to a diagram of an AI elimination operation on an HDR image shown in FIG. 5A to FIG. 5C. A mobile phone 51 displays, by using an HDR display algorithm, the HDR image on an interface 511 based on an original SDR image and an original HDR auxiliary image that are corresponding to the HDR image. The interface 511 further includes an editing control 512, and the displayed HDR image includes a billboard 513.

If a user needs to eliminate the billboard 513, the user manually taps the editing control 512. The mobile phone 51 displays an editing interface 514 in response to a tap operation on the editing control 512. The editing interface 514 includes an AI elimination control 515, an AI beauty control, an AI distortion correction control, and the like.

After selecting the billboard 513 as an elimination object on the editing interface 514, the user taps the AI elimination control 515. In response to a tap operation on the AI elimination control 515, the mobile phone 51 separately normalizes brightness values of the SDR image and the HDR auxiliary image to a range of 0 to 1, and fuses a normalized SDR image and HDR auxiliary image by using an invertible function, to obtain a fused image; then, performs a partial AI editing operation on the fused image to obtain an edited fused image; obtains through reverse calculation, based on the edited fused image and an SDR image on which the partial AI editing operation has been performed, an HDR auxiliary image on which the partial AI editing operation has been performed; and performs HDR display based on the edited SDR image and the edited HDR auxiliary image, to display, on an editing interface 516, an HDR image on which the partial AI editing operation has been performed. A dashed-line box 517 on the editing interface 516 is an area in which the billboard is located.

For example, the SDR image is denoted by *I_{sdr},* and is an RGB 8-bit digital image. The HDR auxiliary image (HDR Layer) is denoted by *I*_{*h*1}*,* and may be an 8-bit grayscale image. The fused image obtained through fusion by using the invertible function *f*(*I*_{sdr}, *I*_{*h*1}) is denoted by *I_{fuse}*. The partial AI editing operation is denoted by *g*. The fused image on which the partial AI editing operation has been performed is denoted by *I_{AIfuse}*, the SDR image on which the partial AI editing operation has been performed is denoted by *I*_{*AI*sdr}, and the HDR auxiliary image on which the partial AI editing operation has been performed is denoted by *I_{AIhl}.*

After the brightness values of *I_{sdr}* and *I*_{*h*1} are normalized to the range of 0 to 1, *I_{sdr}* and *I*_{*h*1} are fused by using the invertible function, to obtain the fused image *I_{fuse},* and in this case, *I_{fuse}*= *f*(*I*_{sdr}, *Iₕₗ*). The partial AI editing operation is performed on *I_{fuse}* to obtain *I_{AIfuse},* and in this case, *I_{AIfuse} = g*(*I_{fuse}*)*.* The partial AI editing operation is performed on *I_{sdr}* to obtain *I*_{*AI*sdr} , and in this case, *I_{AIsdr} = g*(*I_{sdr}*) *.* Finally, *I_{AIhl}* is obtained by performing an inverse operation based on *I_{AIfuse}* and *I*_{*AI*sdr} , and in this case, *I_{AIhl} = f* ^{*-*1}(*I_{AIfuse},I*_{*AI*sdr}). According to this process, the SDR image on which the partial AI editing operation has been performed and the HDR auxiliary image on which the partial AI editing operation has been performed can be obtained.

For better description of a processing process of the partial AI editing operation, the following provides a description by using a diagram of a partial AI elimination process shown in FIG. 6.

As shown in FIG. 6, a billboard exists on an SDR image *I_{sdr}* and is specifically located at a location of a black box in the figure. To eliminate the billboard in the SDR image *I_{sdr}*, an AI elimination operation is performed. The SDR image *I_{sdr}* and an HDR auxiliary image *I*_{*h*1} are first fused to obtain a fused image *I_{fuse}*; an AI elimination operation is performed on the fused image *I_{fuse}* to obtain a fused image *I_{AIfuse}* obtained through AI elimination; the AI elimination operation is also performed on the SDR image *I_{sdr}* to obtain an SDR image *I*_{*AIs*dr} obtained through the AI elimination operation; and reverse calculation is performed based on the fused image *I_{AIfuse}* and the SDR image *I*_{*AI*sdr} to obtain an HDR auxiliary image *I_{AIhl}* obtained through the AI elimination operation. Billboards in the fused image *I_{AIfuse}*, the SDR image *I*_{*AI*sdr}, and the HDR auxiliary image *I_{AIhl}* have been eliminated. Finally, an HDR image on which the billboard has been eliminated is displayed based on the SDR image *I*_{*AI*sdr} and the HDR auxiliary image *I_{AIhl}* by using an HDR display algorithm, and an HDR display effect of the image on which the billboard has been eliminated is maintained.

It can be learned from the foregoing that, for the partial AI editing operation, in this embodiment of this application, the SDR image and the HDR auxiliary image are first fused, the partial AI editing operation is synchronously performed on the fused image and the SDR image, and finally the HDR auxiliary image on which the AI editing operation has been performed is obtained through reverse calculation. In this way, the partial AI editing operation on the HDR image is implemented while the HDR display effect is supported.

It should be noted that, although the foregoing separately describes the partial smearing overlay operation and the partial AI editing operation, in actual application, the user may alternatively perform both the partial smearing overlay operation and the partial AI editing operation on the HDR image. In this case, the electronic device separately performs processing according to the foregoing procedure to obtain the edited SDR image and the edited HDR auxiliary image, and performs HDR display based on the two edited images.

In this embodiment of this application, based on the foregoing partial editing function for the HDR image, the electronic device may further support a global editing function for the HDR image, and enable an image obtained through global editing to still maintain an HDR display effect. For example, the electronic device supports adjustment operations on global brightness, a global contrast, global saturation, a global tone, and the like of the HDR image, and supports global deformation operations such as rotation, cropping, stretching, and scaling on the HDR image. In this way, the electronic device supports both the partial editing function and the global editing function for the HDR image, and can also meet various editing requirements of the user.

For the adjustment operations on the global brightness, the global contrast, the global saturation, the global tone, and the like, the electronic device performs corresponding processing on an SDR image to obtain an edited SDR image, but does not perform processing on an HDR auxiliary image, and finally displays an adjusted HDR image based on the edited SDR image and the original HDR auxiliary image by using an HDR display algorithm. For example, when adjusting the global brightness of the HDR image, the electronic device performs global brightness adjustment on the SDR image to obtain global brightness-adjusted SDR image, and displays global brightness-adjusted HDR image based on the original HDR auxiliary image and the global brightness-adjusted SDR image, so that an HDR display effect of the global brightness-adjusted image is still maintained.

For the global deformation operations such as rotation, cropping, stretching, and scaling, the electronic device synchronously performs same global deformation operations such as rotation, cropping, stretching, and scaling on the SDR image and the HDR auxiliary image to obtain an edited SDR image and an edited HDR auxiliary image, and displays, based on the edited SDR image and the edited HDR auxiliary image, an HDR image obtained through the global deformation operations such as rotation, cropping, stretching, and scaling, to maintain an HDR display effect of the image obtained through the global deformation operations.

The electronic device in embodiments of this application may be but is not limited to a device like a mobile phone, a tablet computer, or a computer. A specific type and a specific structure of the electronic device are not limited herein.

For example, FIG. 7 is a diagram of a structure of an electronic device 700. The electronic device 700 may include but is not limited to a processor 710, a memory 720, a camera 730, and a display screen 740.

It can be understood that the structure illustrated in this embodiment of the present invention does not constitute any specific limitation on the electronic device 700. In some other embodiments of this application, the electronic device 700 may include more or fewer components than those shown in the figure, a combination of some components, splitting of some components, or a different arrangement of the components. The components shown in the figure may be implemented by using hardware, software, or a combination of software and hardware. For example, when the electronic device 700 is specifically a mobile phone, the electronic device 700 further includes a universal serial bus (universal serial bus, USB) interface, a charging management module, a power management module, a battery, an antenna, a mobile communication module, a wireless communication module, an audio module, a loudspeaker, a telephone receiver, a microphone, a headset jack, a sensor, a button, a motor, an indicator, a subscriber identification module (subscriber identification module, SIM) card interface, and the like.

The processor 710 may include one or more processing units. For example, the processor 710 may include an application processor (application processor, AP), a graphics processing unit (graphics processing unit, GPU), an image signal processor (image signal processor, ISP), a controller, a video codec, a digital signal processor (digital signal processor, DSP), and/or a neural-network processing unit (neural-network processing unit, NPU). Different processing units may be independent components, or may be integrated into one or more processors.

The controller may generate an operation control signal based on instruction operation code and a sequence signal, to control instruction fetching and instruction execution.

The processor 710 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a two-way synchronization serial bus, and includes a serial data line (serial data line, SDA) and a serial clock line (serial clock line, SCL). In some embodiments, the processor 710 may include a plurality of I2C buses. The processor 710 may be separately coupled to a touch sensor, a camera 730, and the like through different I2C bus interfaces. For example, the processor 710 may be coupled to the touch sensor through an I2C interface, so that the processor 710 communicates with the touch sensor through the I2C bus interface, to implement a touch function of the electronic device 700.

The MIPI interface may be configured to connect the processor 710 to peripheral components such as the display screen 740 and the camera 730. The MIPI interface includes a camera serial interface (camera serial interface, CSI), a display serial interface (display serial interface, DSI), and the like. In some embodiments, the processor 710 communicates with the camera 730 through the CSI interface, to implement a photographing function of the electronic device 700. The processor 710 communicates with the display screen 740 through the DSI interface, to implement a display function of the electronic device 700.

The GPIO interface may be configured by using software. The GPIO interface may be configured as a control signal or a data signal. In some embodiments, the GPIO interface may be configured to connect the processor 710 to the camera 730, the display screen 740, and the like.

It can be understood that an interface connection relationship between the modules that is described in this embodiment of the present invention is merely an example for description, and does not constitute any limitation on the structure of the electronic device 700. In some other embodiments of this application, the electronic device 700 may alternatively use an interface connection mode different from that in the foregoing embodiment or use a combination of a plurality of interface connection modes.

The electronic device 700 implements a display function by using the GPU, the display screen 740, the application processor, and the like. The GPU is a microprocessor for image processing, and is connected to the display screen 740 and the application processor. The GPU is configured to perform mathematical and geometric calculation, and perform graphics rendering. The processor 710 may include one or more GPUs that execute program instructions to generate or change display information.

The display screen 740 is configured to display an image, a video, and the like. The display screen 740 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro OLED, quantum dot light-emitting diodes (quantum dot light-emitting diodes, QLED), or the like. In some embodiments, the electronic device 700 may include one or N display screens 740, where N is a positive integer greater than 1.

The electronic device 700 may implement a photographing function by using the ISP, the camera 730, the video codec, the GPU, the display screen 740, the application processor, and the like.

The ISP is configured to process data fed back by the camera 730. For example, during photographing, a shutter is pressed, light is transferred to a photosensitive element of the camera through a lens, and an optical signal is converted into an electrical signal. The photosensitive element of the camera transfers the electrical signal to the ISP for processing, to convert the electrical signal into an image visible to naked eyes. The ISP may further perform algorithm optimization on noise, brightness, and a skin color of the image. The ISP may further optimize parameters such as an exposure and a color temperature in a photographing scenario. In some embodiments, the ISP may be disposed in the camera 730.

The camera 730 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS)-based phototransistor. The photosensitive element converts an optical signal into an electrical signal, and then transfers the electrical signal to the ISP for converting the electrical signal into a digital image signal. The ISP outputs the digital image signal to the DSP for processing. The DSP converts the digital image signal into an image signal in a standard RGB or YUV format or the like. In some embodiments, the electronic device 700 may include one or N cameras 730, where N is a positive integer greater than 1.

The digital signal processor is configured to process a digital signal, and may process other digital signals in addition to a digital image signal.

The NPU is a neural-network (neural-network, NN) computing processor that rapidly processes input information by using a biological neural network structure, for example, by using a mode of transmission between neurons in a human brain, and can further perform continuous self-learning. Applications such as intelligent cognition of the electronic device 700, for example, image recognition, facial recognition, voice recognition, and text understanding, can be implemented by using the NPU. In this embodiment of this application, during a partial AI editing operation, the electronic device 700 may perform an AI operation based on the neural-network computing processor, to implement operation tasks such as AI elimination and AI distortion correction.

The memory 720 may be configured to store computer executable program code, where the executable program code includes instructions. The memory 720 may include a program storage area and a data storage area. The program storage area may store an operating system, an application needed by at least one function (for example, an image playing function), and the like. The data storage area may store data created during use of the electronic device 700. In addition, the memory 720 may include a high-speed random access memory, and may further include a nonvolatile memory, for example, at least one magnetic disk storage device, a flash memory device, or a universal flash storage (universal flash storage, UFS). The processor 710 runs the instructions stored in the memory 720 and/or instructions stored in the memory disposed in the processor, to perform various function applications and data processing of the electronic device 700.

The touch sensor is also referred to as a "touch component". The touch sensor may be disposed on the display screen 740. The touch sensor and the display screen 740 form a touchscreen. The touch sensor is configured to detect a touch operation performed on or near the touch sensor. The touch sensor may transmit the detected touch operation to the application processor to determine a type of a touch event. A visual output related to the touch operation may be provided through the display screen 740.

The following describes, based on the electronic device 700, an example of an HDR image editing solution provided in embodiments of this application.

FIG. 8 is a schematic block diagram of a procedure for an HDR image editing solution according to an embodiment of this application. The method may include the following steps.

Step S801: The electronic device 700 displays an HDR image.

It can be understood that the electronic device 700 performs HDR display based on an original SDR image and an original HDR auxiliary image that are corresponding to the HDR image, to implement an HDR display effect on a display terminal. In other words, before a partial editing operation is performed on the HDR image, the HDR display effect is normal.

Step S802: The electronic device 700 detects a partial editing operation on the HDR image.

The partial editing operation may be one or a series of operations that are input by a user on an HDR image display interface and that are used to implement partial editing on the HDR image.

Step S803: The electronic device 700 edits, in response to the partial editing operation, an SDR image corresponding to the HDR image and an HDR auxiliary image corresponding to the HDR image, to obtain an edited SDR image and an edited HDR auxiliary image.

When the partial editing operation includes a partial smearing overlay operation, the electronic device 700 synchronously adds a smearing overlay pattern to corresponding areas in the SDR image and the HDR auxiliary image, to synchronously edit the SDR image and the HDR auxiliary image. "Synchronously" in embodiments of this application does not necessarily mean "simultaneously".

Further, if the electronic device 700 further displays a brightness adjustment control on the HDR image display interface, before adding the smearing overlay pattern, the user can set a brightness value of the smearing overlay pattern by using the brightness adjustment control. In this case, in addition to synchronously adding the smearing overlay pattern to the corresponding areas in the SDR image and the HDR auxiliary image, the electronic device 700 further sets, based on a brightness adjustment operation performed by the user, a brightness value of the area in which the smearing overlay pattern in the HDR auxiliary image is located to the value specified by the user.

If the user adjusts the brightness value of the smearing overlay pattern by using the brightness adjustment control after adding the smearing overlay pattern, after the electronic device 700 displays the edited HDR image, the electronic device 700 sets, based on the brightness adjustment operation performed by the user by using the brightness adjustment control, the brightness value of the area in which the smearing overlay pattern in the HDR auxiliary image is located to the value specified by the user, and displays a brightness-adjusted HDR image based on a brightness-adjusted HDR auxiliary image and the SDR image to which the smearing overlay pattern has been synchronously added.

When the partial editing operation includes a partial AI editing operation, the electronic device 700 performs the foregoing corresponding procedure to obtain an edited SDR image and an edited HDR auxiliary image.

Step S804: The electronic device 700 displays an edited HDR image based on the edited SDR image and the edited HDR auxiliary image.

It can be understood that HDR display needs to depend on the SDR image and the HDR auxiliary image. Before the partial editing operation is performed, the electronic device 700 performs HDR display based on unedited images, namely, the original HDR auxiliary image and the original SDR image. After the partial editing operation is performed, the electronic device 700 performs HDR display based on the edited SDR image and the edited HDR auxiliary image, so that an HDR display effect of the HDR image obtained through partial editing can still be maintained.

Refer to a diagram of a structure of an HDR image editing apparatus shown in FIG. 9. An embodiment of this application further provides an HDR image editing apparatus. The apparatus may include an HDR display module 91 and an HDR editing module 92.

The HDR display module 91 is configured to display an HDR image;
the HDR editing module 92 is configured to: after detecting a partial editing operation on the HDR image, edit, in response to the partial editing operation, a standard dynamic range SDR image corresponding to the HDR image and an HDR auxiliary image corresponding to the HDR image, to obtain an edited SDR image and an edited HDR auxiliary image; and
the HDR display module 91 is further configured to display an edited HDR image based on the edited SDR image and the edited HDR auxiliary image.

In a possible implementation, the partial editing operation includes a partial smearing overlay operation; and the HDR editing module 92 is specifically configured to: add a smearing overlay pattern corresponding to the partial smearing overlay operation to a first target area in the SDR image, to obtain the edited SDR image; and add the smearing overlay pattern to a second target area in the HDR auxiliary image, to obtain the edited HDR auxiliary image, where
the first target area is an area that is in the SDR image and that is corresponding to a smearing overlay area in the HDR image, the second target area is an area that is in the HDR auxiliary image and that is corresponding to the smearing overlay area in the HDR image, and the smearing overlay area is an area on which the partial smearing overlay operation is performed in the HDR image.

In a possible implementation, the partial smearing overlay operation includes at least one of the following: a watermark operation, a doodle operation, a mosaic operation, and a sticker operation.

In a possible implementation, the edited HDR image includes the smearing overlay pattern. The HDR editing module 92 is further configured to detect an adjustment operation performed by a brightness adjustment control, where the brightness adjustment control is displayed on an HDR image display interface and is configured to adjust brightness of the smearing overlay pattern.

The HDR display module is further configured to display a brightness-adjusted HDR image in response to the adjustment operation.

Brightness of the smearing overlay pattern in the brightness-adjusted HDR image is different from that of the smearing overlay pattern in the edited HDR image. In other words, brightness values of the smearing overlay pattern before and after adjustment are different.

In a possible implementation, the HDR editing module 92 is specifically configured to: in response to the adjustment operation, set a brightness value of the smearing overlay pattern in the edited HDR auxiliary image to a first value, to obtain a brightness-adjusted HDR auxiliary image, where the first value is a brightness value determined based on the adjustment operation; and
the HDR display module 91 is specifically configured to display the brightness-adjusted HDR image based on the brightness-adjusted HDR auxiliary image and the edited SDR image.

In a possible implementation, an adjustment range of the brightness adjustment control is from a maximum brightness value of the HDR auxiliary image to a minimum brightness value of the HDR auxiliary image.

In a possible implementation, the partial editing operation includes a partial AI editing operation; and the HDR editing module 92 is specifically configured to: separately normalize the SDR image and the HDR auxiliary image to obtain a normalized SDR image and a normalized HDR auxiliary image; perform image fusion on the normalized SDR image and the normalized HDR auxiliary image to obtain a fused image; perform a partial AI editing operation on the fused image to obtain an edited fused image; perform the partial AI editing operation on the SDR image to obtain the edited SDR image; and perform reverse calculation based on the edited fused image and the edited SDR image, to obtain the edited HDR auxiliary image.

In a possible implementation, the partial AI editing operation includes at least one of the following: AI elimination, AI beauty, and AI distortion correction.

An electronic device provided in an embodiment of this application may include a memory, a processor, and a computer program that is stored in the memory and that is capable of being run on the processor. The processor implements the method in any one of the foregoing method embodiments when executing the computer program.

An embodiment of this application further provides a computer-readable storage medium. The computer-readable storage medium stores a computer program, and when the computer program is executed by a processor, steps in the foregoing method embodiments can be implemented.

An embodiment of this application provides a computer program product. When the computer program product runs on an electronic device, the electronic device is enabled to perform steps in the foregoing method embodiments.

An embodiment of this application further provides a chip system. The chip system includes a processor, and the processor is coupled to a memory. The processor executes a computer program stored in the memory, to implement the method in the foregoing method embodiments. The chip system may be a single chip or a chip module including a plurality of chips.

In the foregoing embodiments, the descriptions of various embodiments have respective focuses. For a part that is not detailed or recorded in an embodiment, refer to related descriptions in other embodiments. It should be understood that sequence numbers of the steps do not mean execution sequences in the foregoing embodiments. The execution sequences of the processes should be determined based on functions and internal logic of the processes, and should not constitute any limitation on the implementation processes of embodiments of this application. In addition, in descriptions of this specification and claims of this application, terms "first", "second", "third", and the like are merely intended for differentiated description, but shall not be understood as an indication or an implication of relative importance. Reference to "an embodiment", "some embodiments", or the like described in this specification of this application means that one or more embodiments of this application include a specific feature, structure, or characteristic described with reference to the embodiment. Therefore, sentences "in an embodiment", "in some embodiments", "in some other embodiments", "in still some other embodiments", and the like in different parts of this specification unnecessarily reference a same embodiment, but mean "one or more embodiments but not all embodiments", unless otherwise specified particularly.

It should be finally noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A high dynamic range HDR image editing method, applied to an electronic device, wherein the method comprises:
displaying an HDR image;
detecting a partial editing operation on the HDR image;
editing, in response to the partial editing operation, a standard dynamic range SDR image corresponding to the HDR image and an HDR auxiliary image corresponding to the HDR image, to obtain an edited SDR image and an edited HDR auxiliary image; and
displaying an edited HDR image based on the edited SDR image and the edited HDR auxiliary image.

2. The method according to claim 1, wherein the partial editing operation comprises a partial smearing overlay operation; and
the editing, in response to the partial editing operation, a standard dynamic range SDR image corresponding to the HDR image and an HDR auxiliary image corresponding to the HDR image, to obtain an edited SDR image and an edited HDR auxiliary image comprises:
adding a smearing overlay pattern corresponding to the partial smearing overlay operation to a first target area in the SDR image, to obtain the edited SDR image; and
adding the smearing overlay pattern to a second target area in the HDR auxiliary image, to obtain the edited HDR auxiliary image, wherein
the first target area is an area that is in the SDR image and that is corresponding to a smearing overlay area in the HDR image, the second target area is an area that is in the HDR auxiliary image and that is corresponding to the smearing overlay area in the HDR image, and the smearing overlay area is an area on which the partial smearing overlay operation is performed in the HDR image.

3. The method according to claim 2, wherein the partial smearing overlay operation comprises at least one of the following: a watermark operation, a doodle operation, a mosaic operation, and a sticker operation.

4. The method according to claim 2, wherein the edited HDR image comprises the smearing overlay pattern; and
the method further comprises:
detecting an adjustment operation performed by a brightness adjustment control, wherein the brightness adjustment control is displayed on an HDR image display interface and is configured to adjust brightness of the smearing overlay pattern; and
displaying a brightness-adjusted HDR image in response to the adjustment operation, wherein
brightness of the smearing overlay pattern in the brightness-adjusted HDR image is different from that of the smearing overlay pattern in the edited HDR image.

5. The method according to claim 4, wherein the displaying a brightness-adjusted HDR image in response to the adjustment operation comprises:
in response to the adjustment operation, setting a brightness value of the smearing overlay pattern in the edited HDR auxiliary image to a first value, to obtain a brightness-adjusted HDR auxiliary image, wherein the first value is a brightness value determined based on the adjustment operation; and
displaying the brightness-adjusted HDR image based on the brightness-adjusted HDR auxiliary image and the edited SDR image.

6. The method according to claim 4, wherein an adjustment range of the brightness adjustment control is from a maximum brightness value of the HDR auxiliary image to a minimum brightness value of the HDR auxiliary image.

7. The method according to any one of claims 1 to 6, wherein the partial editing operation comprises a partial AI editing operation; and
the editing, in response to the partial editing operation, a standard dynamic range SDR image corresponding to the HDR image and an HDR auxiliary image corresponding to the HDR image, to obtain an edited SDR image and an edited HDR auxiliary image comprises:
separately normalizing the SDR image and the HDR auxiliary image to obtain a normalized SDR image and a normalized HDR auxiliary image;
performing image fusion on the normalized SDR image and the normalized HDR auxiliary image to obtain a fused image;
performing a partial AI editing operation on the fused image to obtain an edited fused image;
performing the partial AI editing operation on the SDR image to obtain the edited SDR image; and
performing reverse calculation based on the edited fused image and the edited SDR image, to obtain the edited HDR auxiliary image.

8. The method according to claim 7, wherein the partial AI editing operation comprises at least one of the following: AI elimination, AI beauty, and AI distortion correction.

9. An HDR image editing apparatus, wherein the apparatus comprises an HDR display module and an HDR editing module;
the HDR display module is configured to display an HDR image;
the HDR editing module is configured to: after detecting a partial editing operation on the HDR image, edit, in response to the partial editing operation, a standard dynamic range SDR image corresponding to the HDR image and an HDR auxiliary image corresponding to the HDR image, to obtain an edited SDR image and an edited HDR auxiliary image; and
the HDR display module is further configured to display an edited HDR image based on the edited SDR image and the edited HDR auxiliary image.

10. The apparatus according to claim 9, wherein the partial editing operation comprises a partial smearing overlay operation; and
the HDR editing module is specifically configured to:
add a smearing overlay pattern corresponding to the partial smearing overlay operation to a first target area in the SDR image, to obtain the edited SDR image; and
add the smearing overlay pattern to a second target area in the HDR auxiliary image, to obtain the edited HDR auxiliary image, wherein
the first target area is an area that is in the SDR image and that is corresponding to a smearing overlay area in the HDR image, the second target area is an area that is in the HDR auxiliary image and that is corresponding to the smearing overlay area in the HDR image, and the smearing overlay area is an area on which the partial smearing overlay operation is performed in the HDR image.

11. The apparatus according to claim 10, wherein the partial smearing overlay operation comprises at least one of the following: a watermark operation, a doodle operation, a mosaic operation, and a sticker operation.

12. The apparatus according to claim 10, wherein the edited HDR image comprises the smearing overlay pattern;
the HDR editing module is further configured to detect an adjustment operation performed by a brightness adjustment control, wherein the brightness adjustment control is displayed on an HDR image display interface and is configured to adjust brightness of the smearing overlay pattern; and
the HDR display module is further configured to display a brightness-adjusted HDR image in response to the adjustment operation, wherein
brightness of the smearing overlay pattern in the brightness-adjusted HDR image is different from that of the smearing overlay pattern in the edited HDR image.

13. The apparatus according to claim 12, wherein
the HDR editing module is specifically configured to: in response to the adjustment operation, set a brightness value of the smearing overlay pattern in the edited HDR auxiliary image to a first value, to obtain a brightness-adjusted HDR auxiliary image, wherein the first value is a brightness value determined based on the adjustment operation; and
the HDR display module is specifically configured to display the brightness-adjusted HDR image based on the brightness-adjusted HDR auxiliary image and the edited SDR image.

14. The apparatus according to claim 12, wherein an adjustment range of the brightness adjustment control is from a maximum brightness value of the HDR auxiliary image to a minimum brightness value of the HDR auxiliary image.

15. The apparatus according to any one of claims 9 to 14, wherein the partial editing operation comprises a partial AI editing operation; and
the HDR editing module is specifically configured to:
separately normalize the SDR image and the HDR auxiliary image to obtain a normalized SDR image and a normalized HDR auxiliary image;
perform image fusion on the normalized SDR image and the normalized HDR auxiliary image to obtain a fused image;
perform a partial AI editing operation on the fused image to obtain an edited fused image;
perform the partial AI editing operation on the SDR image to obtain the edited SDR image; and
perform reverse calculation based on the edited fused image and the edited SDR image, to obtain the edited HDR auxiliary image.

16. The apparatus according to claim 15, wherein the partial AI editing operation comprises at least one of the following: AI elimination, AI beauty, and AI distortion correction.

17. An electronic device, comprising a memory, a processor, and a computer program that is stored in the memory and that is capable of being run on the processor, wherein the processor implements the method according to any one of claims 1 to 8 when executing the computer program.

18. A computer-readable storage medium, wherein the computer-readable storage medium stores a computer program, and when the computer program is executed by a processor, the method according to any one of claims 1 to 8 is implemented.
